# EUROPEAN PATENT SPECIFICATION

(11) **EP 3 359 451 B1**
(45) Date of publication and mention of the grant of the patent: **08.07.2020**
(21) Application number: 16801288.8
(22) Date of filing: 07.10.2016
(51) Int. Cl.: B65B 29/02, B65B 35/50, B65B 35/54, B65B 35/58, B65D 77/04, B65G 57/081, B65B 5/10, B65B 35/40, B65D 85/62, B65D 85/804

(54) **PUSHING DEVICE**
SCHUBVORRICHTUNG
DISPOSITIF DE POUSSÉE

(30) Priority: 09.10.2015 IT UB20154269
(43) Date of publication of application: 15.08.2018
(73) Proprietor: ICA S.p.A., 40138 Bologna (IT)
(72) Inventor: RAPPARINI, Gino, 40068 Bologna (IT)
(74) Representative: Grünecker Patent- und Rechtsanwälte PartG mbB
(86) International application number: PCT/IB2016/001455
(87) International publication number: WO 2017/060768

(56) References cited:
- EP-A1- 1 106 512
- WO-A1-97/26188
- WO-A1-2014/040960
- US-A- 1 975 238

## Description

The present invention concerns the field of pushing devices. In particular, the present invention concerns a pushing device for the displacement of objects that comprise a first end, a second end and a protruding edge arranged in proximity of the first end arranged in an alternate manner in one or more single file rows, for example in order to insert a predetermined number of these objects in a package.

### TECHNICAL FIELD

The arrangement and packaging of objects that comprise a first end, a second end and a protruding edge arranged in proximity of the first end are not easy to make due to the asymmetry of the objects themselves. In particular, in order to optimise the space occupied by the objects inside the packages, it is desirable to pack groups of objects organised in one or more rows in which, in each row, the objects are oriented in an alternate manner so as to minimise and thus optimise the total bulk.

In the present finding the expression "a protruding edge arranged in proximity of the first end" does not only mean that the protruding edge is arranged directly at the first end, i.e. that the protruding edge protrudes laterally directly from the first end, but also more generally that the protruding edge is less distant from the first end than it is distant from the second end so that the object is in any case asymmetrical having a protruding edge that is closer to the first end than to the second end.

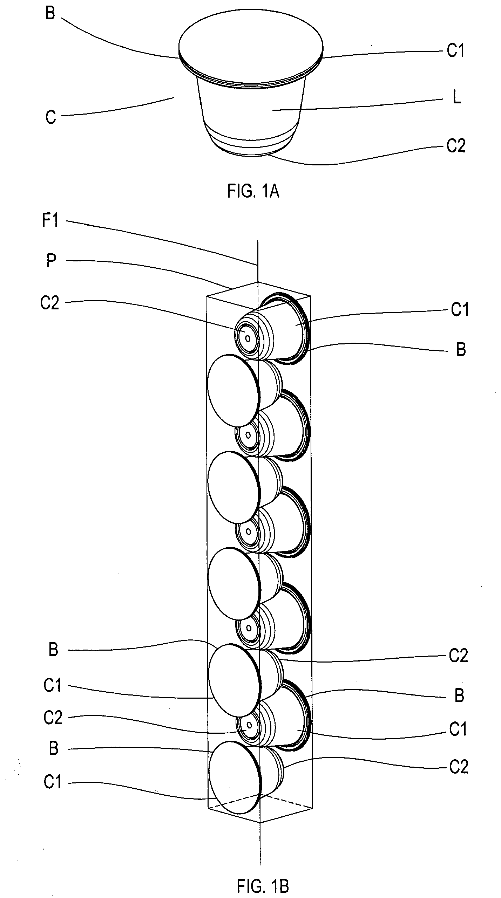

An example of an object C comprising a first end C1, a second end C2 and a protruding edge B arranged in proximity of the first end C1 is shown in figure 1A. The object C of figure 1A is a capsule for obtaining beverages. In particular, the object C comprises a side wall L that defines the containment volume of the capsule in which the product, soluble and/or for infusion, from which the beverage is obtained is arranged. The product can for example be powdered coffee, tea, powdered milk, cocoa or similar. In the example shown in the figures, the object C is frusto-conical shaped. However, the present invention is not limited to the displacement of frusto-conical objects. The protruding edge B protrudes laterally from the first end C1 of the object C. In this way, the width of the object C in the region of the first end C1 is greater than the width in the region of the second end C2 due to the presence of the protruding edge B. Due to this asymmetry it is preferable to pack groups of objects C organised in one or more rows in which, in each row, the objects are oriented in an alternate manner so as to optimise the total bulk.

An example of a group of ten objects like that of Figure 1A arranged in an alternate manner in a single-file row inside a package P is shown in Figure 1B. The ten objects are organised in a row F1 and, inside the row F1, are oriented in an alternate manner so that the total bulk is minimised.

In the present finding, the expression "oriented in an alternate manner in one or more rows" refers to the orientation with which the objects are arranged with respect to one another in each row. In particular, in the row the objects are arranged above or beside one another so as to be substantially parallel to one another. However, the objects are oriented the opposite way. In particular, the corresponding ends of adjacent objects point in opposite directions. In a vertical row, for example, the objects are oriented so that, if the first end of a first object points to the right, then the first end of a second object, adjacent to the first object and arranged directly above or directly below it, points to the left, and vice-versa. This alternate structure is repeated along the entire row. In other words, the protruding edge of the first end of the first object is touching the second end of the second object adjacent to the first object, i.e. with the opposite end with respect to the first end. In turn, the second end of the second object is touching the protruding edge of the first end of the third object and so on. Similarly, in a horizontal row the objects are oriented so that, if the first end of a first object points downwards, then the first end of a second object, adjacent to the first object and arranged directly in front of or directly behind it along the row, points upwards, and vice-versa. This alternate structure is repeated along the entire row. In a row of this type in which the objects are oriented in an alternate manner, all of the objects that occupy an odd position along the row (for example, the first object, the third object, the fifth object and so on) have the same orientation. All of the objects that occupy an even position along the row (for example the second object, the fourth object, the sixth object and so on) have the same orientation and this orientation is opposite to the orientation of the objects that occupy the odd positions along the row.

Figure 1B indeed shows an example of a vertical row F1 in which the ten objects C are oriented in an alternate manner. Starting for example from the first object C arranged lowest in the row F1 inside the package P, it can be seen that it has the first end C1 with the protruding edge B facing towards the left in the figure whereas the second end C2 faces towards the right. The second object C arranged directly above the first object and touching it is oriented the opposite way, i.e. with the first end C1 facing towards the right and the second end C2 facing towards the left. The third object arranged directly above the second object and touching it is oriented like the first object, i.e. with the first end C1 facing towards the left and the second end C2 facing towards the right. This alternate structure is repeated along the entire row of ten objects up to the tenth object arranged highest in the row F1 and having orientation like the second object, i.e. with the first end C1 facing towards the right and the second end C2 facing towards the left.

Italian patent application No. BO2014A000541 and European patent application No. 15182748.2 describe machines and methods for organising objects in an alternate manner in rows like for example in the row F1 shown in figure 1B. The present finding, on the other hand, concerns the displacement along a given direction of organised rows of objects like those that are obtained with the findings described in these two patent applications. The displacement of rows of objects comprising a predetermined number of objects arranged in an alternate manner in each single row is important for example to direct the rows towards one or more packaging stations, so as to package the objects. Moreover, the displacement of rows of objects comprising a predetermined number of objects arranged in an alternate manner in each row is important also to introduce the rows inside packages. Document EP1106512A1 discloses a carton filling device incorporating a conveyor for moving cartons and objects to be located in the cartons simultaneously down a track with the objects respectively facing opposite to open ends of the cartons located at one side of the conveyor. A control arm is situated in a start position at the other side of the conveyor and carries pushers for engaging the objects and pushing them towards and into the open ends of the cartons.

The purpose of the present finding is to provide a pushing device that makes it possible to displace a predetermined number of objects comprising a first end, a second end and a protruding edge arranged in proximity of the first end and arranged in an alternate manner in one or more single file rows along a first direction of displacement and that operates in an effective, reliable and quick manner.

### SUMMARY

According to the invention, a pushing device is provided according to the features of claim 1. The pushing device thus comprises a first guide that is adapted for housing the objects during the sliding independently from the orientation of the objects themselves. In other words, the first guide is adapted for housing both the objects oriented according to a first orientation and the objects oriented the opposite way according to a second orientation in the row. In this way, all of the objects of the row of objects arranged in an alternate manner are housed and slide in the first guide during the displacement. Moreover, the pushing device according to the present finding comprises pushing means that are translatable along two directions: a first translation direction that allows the pushing means to be approached to and/or distanced from the first guide and thus from the objects housed in the first guide and a second translation direction that coincides substantially with the predetermined displacement direction along which the row of objects moves through the pushing device. Given that the pushing means can be approached to the objects arranged in the guide so as to touch at least one of the objects of the row, the pushing by the pushing means on the object that they touch translates into a push of the entire row arranged downstream of the object touched along the displacement direction. According to a particularly advantageous embodiment of the present invention, the first guide is arranged horizontally, i.e. parallel to the ground. In this way, the first displacement direction is horizontal, i.e. parallel to the ground.

According to a further embodiment of the present invention, a pushing device is provided in which the first translation direction is perpendicular with respect to the first predetermined displacement direction so that the pushing means approach the objects from above and/or from below when the objects are housed in the first guide. According to this embodiment, the pushing means can approach the guide and move away from the guide and, therefore, from the objects housed in the guide, from above and/or from below. The pushing means are for example arranged above the guide and through the translation along the first translation direction they can approach or move away from the guide from above. The pushing means can also be arranged below the guide so that through the translation along the first translation direction they can approach the guide or move away from the guide from below.

According to a further embodiment of the present invention, a pushing device is provided in which the first translation direction is perpendicular with respect to the first predetermined displacement direction so that the pushing means approach the guide and thus the objects housed in the guide from the right and/or from the left. According to this embodiment, the pushing means can approach the guide and move away from the guide and, therefore, from the objects housed in the guide, from the right and/or from the left, i.e. from a lateral position with respect to the guide. The pushing means are for example arranged laterally with respect to the guide, to the right and/or left thereof and through the translation along the first translation direction they can approach or move away from the guide laterally. The pushing means can for example be arranged exclusively on the right or on the left with respect to the guide and can thus approach the guide and the objects housed in it with a translation from the right or from the left. According to a further embodiment of the invention, the pushing means are configured so as to be arranged both on the right and on the left of the guide and thus so as to be able to approach or move away from the guide on both sides. The pushing means can for example comprise two bars, one to the right of the guide and one to the left of the guide. Each of the two bars is translatable in a direction perpendicular with respect to the direction of the guide so as to approach or move away from the guide laterally. Advantageously, the translation of the two bars takes place simultaneously so that both approach or move away from the guide simultaneously.

According to a further embodiment of the present invention, a pushing device is provided in which the pushing means are configured so as to engage the protruding edge of the objects to be pushed so that, when the pushing means approach the objects to be pushed, the pushing means touch only one of the objects oriented with the protruding edge facing towards the pushing means and do not touch the objects oriented with the protruding edge facing in the opposite direction with respect to the pushing means. This configuration is particularly advantageous because it makes it possible to ensure that the pushing means always act on one of the objects oriented in a certain way, in particular those oriented with the protruding edge facing towards the pushing means, whereas they do not touch and thus do not act on the objects oriented the opposite way, with the protruding edge facing in the opposite direction with respect to the pushing means. In this way, it is automatically ensured that the groups of objects pushed by the pushing device are always groups, the first element of which directly touching the pushing device has the known and predetermined orientation with the protruding edge facing towards the pushing means. The pushing means are thus prevented from touching an object oriented with the protruding edge facing in the opposite direction with respect to the pushing device and thus the group of objects pushed by the pushing device is prevented from having an incorrect number or an incorrect orientation of the objects themselves.

According to a further embodiment of the present invention, a pushing device is provided in which the pushing means comprise a fork comprising two teeth and in which the lateral distance between the two teeth is greater than the width of the second end of the objects and is smaller than the width of the first end of the objects. In this way, when the pushing means with the fork are approached to the guide in which the objects to be pushed are housed, the fork will touch only one of the objects oriented so that their first end with the protruding edge faces towards the fork. The objects with the second end facing towards the fork slide between the teeth of the fork and do not touch them since their lateral distance is greater than the width of the second end of the objects. The fork thus pushes directly only one of the objects oriented with the first end facing towards the fork and it is ensured that all of the groups of objects pushed by the pushing device are such that the first object of the group directly touching the fork is an object oriented with the first end facing towards the fork.

According to the present invention, a pushing device is provided in which the first guide comprises four housings, for example four slits or grooves, in which a first housing and a second housing are side by side at the same first level with respect to the bottom of the guide so as to house the protruding edge of the objects oriented according to a first orientation, and in which a third housing and a fourth housing are side by side at the same second level with respect to the bottom of the guide so as to house the protruding edge of the objects oriented according to a second orientation. In this way, the protruding edge of the objects oriented according to a first orientation is housed in the first housing and in the second housing during the sliding. At the same time, the protruding edge of the objects oriented according to a second orientation opposite to the first orientation is housed in the third housing and in the fourth housing during the sliding. In this way, all of the objects of the row of objects arranged in an alternate manner are housed and slide in the first guide during the displacement. According to a further embodiment of the present invention, a pushing device is provided in which the bottom of the first guide is movable along the first predetermined displacement direction and its surface is configured so as to drag the objects in the displacement by means of friction. The surface of the bottom of the guide can for example be a knurled surface. In this way, the displacement of the row of objects towards the action area of the pushing means is facilitated and improved. For example, the row of objects could arrive in output from a machine that arranges the objects in an alternate manner in one or more alternate rows and could thus advantageously be carried in an easy and effective manner towards the action area of the pushing means thanks to the configuration of the bottom of the first guide according to this embodiment of the invention. According to embodiments of the present invention, the movable part of the bottom of the first guide corresponds only to one or more fractions of the length of the first guide, for example one or more fractions of the first guide arranged upstream with respect to the action area of the pushing means. According to a further embodiment of the present invention, the movable part of the bottom of the first guide corresponds to the entire length of the first guide.

According to a further embodiment of the present invention, a pushing device is provided in which the first guide further comprises advancing means, for example one or more nozzles for blowing air under pressure, adapted for advancing the objects along the first predetermined displacement direction. In this way, the displacement of the row of objects towards the action area of the pushing means is facilitated and improved. For example, the row of objects could arrive in output from a machine that organises the objects in an alternate manner in one or more alternate rows and could thus advantageously be carried in an easy and effective manner towards the action area of the pushing means thanks to the advancing means. The advancing means can for example comprise through holes made in the side walls of the first guide through which pressurised air is blown that pushes the objects towards the action area of the pushing means. Preferably, the through holes are tilted so as to point downstream in the advancing direction and thus to blow air in the advancing direction. The advancing means can be distributed along the entire length of the first guide. Alternatively, the advancing means can be arranged only along one or more fractions of the length of the first guide, for example along one or more fractions of the length of the first guide arranged upstream of the action area of the pushing means. In the embodiments of the invention in which the bottom of the first guide is movable, the advancing means can be added to this characteristic or can be provided only on the portions of the first guide length where the bottom is not movable.

According to a further embodiment of the present invention, a pushing device is provided further comprising a second guide parallel to the first guide, the second guide comprising housings adapted for housing the protruding edge of the objects during the displacement, and in which when the pushing means are approached to the objects housed in the first guide, the pushing means touch not only at least one of the objects housed in the first guide but also at least one of the objects housed in the second guide so as to push at the same time objects along the first predetermined displacement direction along the first guide and along the second guide. This embodiment allows the simultaneous displacement of two parallel rows of objects organised in each row in an alternate manner. According to further embodiments of the present invention the second guide comprises the optional characteristics indicated above relative to the first guide, for example the housings on the various levels, or the movable bottom and adapted for dragging the objects by friction or the advancing means like for example the nozzles or the holes for blowing air under pressure.

According to a further embodiment of the present invention, a pushing device is provided further comprising a third guide parallel to the first guide and to the second guide, the third guide comprising housings for housing the protruding edge of the objects during the displacement, and in which when the pushing means are approached to the objects housed in the first guide, the pushing means touch not only at least one of the objects housed in the first guide and at least one of the objects housed in the second guide, but also at least one of the objects housed in the third guide so as to push at the same time objects along the first predetermined displacement direction along the first guide, along the second guide and along the third guide. This embodiment allows the simultaneous displacement of three parallel rows of objects organised in each row in an alternate manner. According to further embodiments of the present invention the third guide comprises the optional characteristics indicated above relative to the first guide, for example the housings on the various levels, or the movable bottom and adapted for dragging the objects by friction or the advancing means like for example the nozzles or the holes for blowing pressurised air.

According to a further embodiment of the present invention, a system is provided for packaging a predetermined number of objects comprising a first end, a second end and a protruding edge arranged in proximity of the first end and arranged in an alternate manner in one or more single file rows in a package, in which the system comprising a pushing device according to one of the embodiments of the present invention indicated above and an arranging machine for arranging objects comprising a first end and a protruding edge arranged in proximity of said first end in an alternate manner along organised rows in which the exit of the arranging machine is coupled with the input of the pushing device so that the pushing device receives in input one or more rows of objects arranged in an alternate manner in output from the arranging machine. The system according to this embodiment of the invention makes it possible both to organise the objects in an alternate manner in one or more single file rows and to displace such one or more rows along a predetermined displacement direction. Examples of arranging machines that can be used for this embodiment of the present invention can be found in Italian patent application No. BO2014A000541 and in European patent application No. 15182748.2.

According to a further embodiment of the present invention, a system for packaging a predetermined number of objects is provided comprising a first end, a second end and a protruding edge arranged in proximity of the first end and arranged in an alternate manner in one or more single file rows in a package, in which the system comprises a pushing device according to one of the embodiments of the present invention indicated above and a cartoning machine adapted for providing one or more of the packages, in which the cartoning machine and the pushing device are coupled so that the predetermined number of objects pushed by the pushing device is introduced in a package provided by the cartoning machine. The system according to this embodiment of the invention makes it possible both to displace the objects arranged in an alternate manner in one or more single file rows along a predetermined displacement direction and to introduce them in a package provided by the cartoning machine thanks to the displacement carried out by means of the pushing device.

According to a further embodiment of the present invention, a machine for packaging a predetermined number of objects is provided comprising a first end, a second end and a protruding edge arranged in proximity of the first end and arranged in an alternate manner in one or more single file rows in a package, in which the machine comprises a system according to both of the embodiments indicated above. The machine according to this embodiment makes it possible to organise the objects in an alternate manner in one or more single file rows, to displace such one or more rows along a predetermined displacement direction and to introduce such one or more rows in a package provided by the cartoning machine thanks to the displacement carried out by means of the pushing device.

According to a further embodiment of the present invention, a method for packaging a predetermined number of objects is provided comprising a first end, a second end and a protruding edge arranged in proximity of the first end and arranged in an alternate manner in one or more single file rows in a package, the method comprising the following step: insertion of the predetermined number of objects in the package by means of a pushing device according to one of the embodiments indicated above, in which the package is ready and open before insertion. According to this embodiment of the invention, a predetermined number of objects is inserted into one or more ready-prepared packages. Therefore, it is not necessary to make the package around the group of objects to be packed as happens based on different known solutions of the state of the art. In particular, based on known solutions of the state of the art, the objects are placed on a flat sheet of material that is then suitably folded, closed and glued so as to form the package that encloses the objects. The present invention, on the other hand, advantageously makes it possible to insert the groups of objects directly in ready-prepared packages. In this way, the number of machines and operative stations to be coupled with the packaging system is reduced and therefore the space occupied by the system as well as the packaging process costs are reduced. Based on some embodiments of the present invention, the pushing device can further comprise opening means adapted for keeping the packages open during the insertion of the objects by means of the pushing device. The opening means can for example be arranged at the exits downstream of the one or more guides of the pushing device based on the present invention. For example, the opening means can comprise blades that keep open the one or more compartments of the package to be filled with the objects pushed by the pushing device. The pushing device according to the various embodiments of the present invention can thus be coupled with a transportation system of empty but ready-prepared packages.

According to a further embodiment of the present invention, a packaging method is provided in which the objects are capsules for obtaining beverages, for example coffee, tea or similar. The capsules can be sealed and contain the product from which the desired beverage is obtained, for example an infusion product, like powdered coffee, tea leaves or similar, or a water-soluble product, like cocoa powder, powdered milk, powdered soup or similar. The capsules can have a frusto-conical body with the larger base of the frustum of cone corresponding to the first end of the capsule in proximity of which the protruding edge is present.

### BRIEF DESCRIPTION OF THE FIGURES

The present invention will be described with reference to the attached figures in which the same reference numerals and/or reference marks indicate the same parts and/or similar parts and/or corresponding parts of the system.
Figure 1A shows an example of an object that comprises a first end, a second end and a protruding edge arranged in proximity of the first end;
Figure 1B shows a group of 10 objects like that of Figure 1A arranged in an alternate manner in a single-file row inside a package;
Figure 2 schematically shows a view from above of a pushing device according to an embodiment of the present invention;
Figure 3A and 3B schematically show section views along the lines I-I and II-II, respectively, of Figure 2;
Figures 4A to 4F schematically show different operating steps of the system of Figure 2;
Figure 5 schematically shows a system comprising an arranging machine and a pushing device like that of figure 2;
Figure 6 schematically shows a view from above of a pushing device according to a further embodiment of the present invention;
Figures 7 and 8 schematically show section views along the lines I-I and II-II, respectively, of Figure 6;
Figures 9A to 9F schematically show different operating steps of the system of Figure 6;
Figure 10 schematically shows a system comprising an arranging machine and a pushing device like that of figure 6;
Figure 11 schematically shows a view from above of a pushing device according to a further embodiment of the present invention;
Figures 12, 13 and 14 schematically show section views along the lines I-I, II-II and III-III respectively, of Figure 11;
Figures 15A to 15F schematically show different operating steps of the system of Figure 11;
Figure 16 schematically shows a system comprising an arranging machine and a pushing device like that of figure 11.

### DETAILED DESCRIPTION

Hereinafter, the present invention is described with reference to particular embodiments, as illustrated in the attached tables of drawings. However, the present invention is not limited to the particular embodiments described in the following detailed description and represented in the figures, but rather the embodiments described simply exemplify the various aspects of the present invention, the purpose of which is defined by the claims. Further modifications and variations of the present invention will become clear to those skilled in the art.

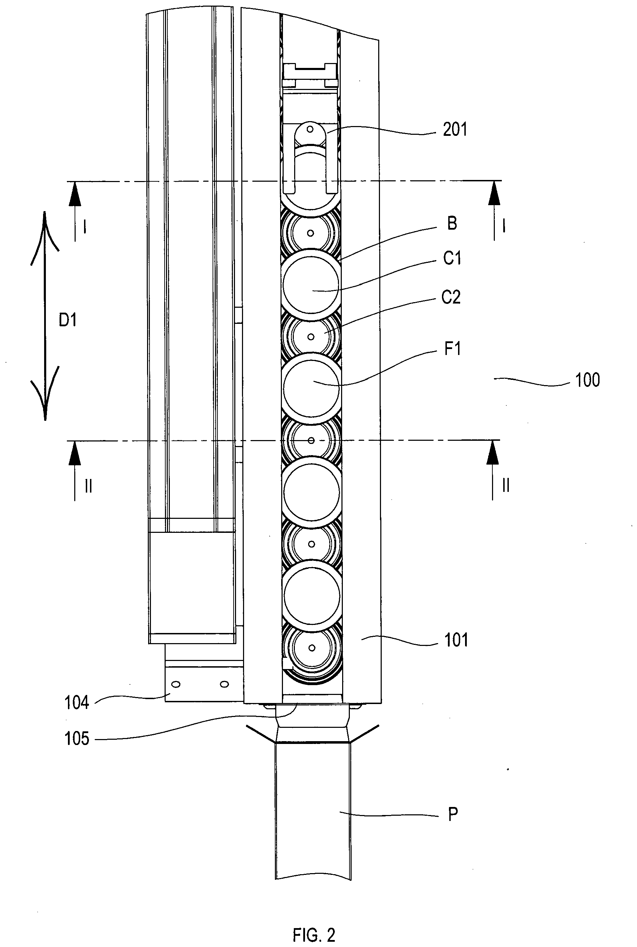

Figure 2 schematically shows a view from above of a pushing device 100 according to an embodiment of the invention. The pushing device 100 comprises a first guide 101 for the sliding of the objects C along a first predetermined displacement direction D1. In the view from above of figure 2 the direction D1 is vertical as shown by the arrow and the advancing direction of the system is from the top towards the bottom of the figure.

As can be seen in the figures, the objects C are arranged in an alternate manner in the row F1. In particular, it can be seen that the row F1 comprises objects C with the first end C1 with the protruding edge B facing upwards alternated with objects with the second end C2 facing upwards and thus with the first end C1 with the protruding edge B facing downwards.

The pushing device 100 allows the displacement and the consequent insertion of a predetermined number N of objects C of the row F1 in the package P shown at the bottom in the figures. The package P is open and is positioned so as to receive in input the objects of the row F1 pushed by the pushing device. The package P can for example be provided with a cartoning machine coupled with the pushing device.

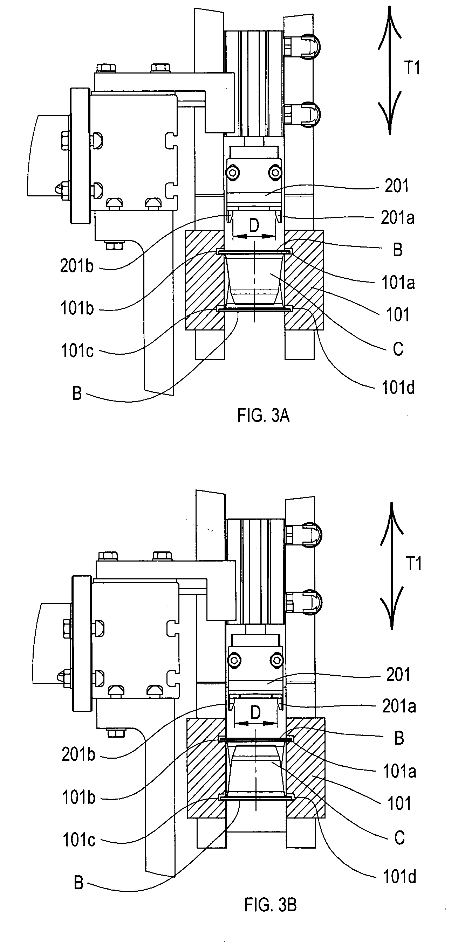

Figures 3A and 3B schematically show section views along the lines I-I and II-II, respectively, of Figure 2. Figures 3A and 3B show that the first guide 101 comprises the four housings 101a, 101b, 101c and 101d adapted for housing the protruding edge B of the objects C of the row F1 during the displacement. In particular, each of the four housings 101a, 101b, 101c and 101d is a slit that runs along the entire length of the first guide 101. The protruding edge B of the objects C thus runs inside the slit. The first housing 101a is in the upper part of the right side of the first guide 101. The second housing 101b is in the upper part of the left side of the first guide 101. In particular, the first housing 101a and the second housing 101b are side by side at the same first level with respect to the bottom of the guide 101 so as to accommodate the protruding edge B of the objects C of the row F1 oriented with the first end C1 facing upwards. The third housing 101c is in the lower part of the left side of the first guide 101. The fourth housing 101d is in the lower part of the right side of the first guide 101. In particular, the third housing 101a and the fourth housing 101d are side by side at the same second level with respect to the bottom of the guide 101 so as to accommodate the protruding edge B of the objects C of the row F1 oriented with the first end C1 facing downwards. In the embodiments of the invention in which one or more portions of the bottom of the first guide are mobile in the advancing direction so as to move the objects C towards the action area of the pushing means of the system, the movable portion of the bottom of the guide, for example a conveyor belt, is at the level of the housings 101c and 101d so as to support and drag the objects C.

As can be seen from the comparison of figures 3A and 3B, the vertical section of the first guide 101 does not change along the length of the first guide. The distance between the side walls of the first guide 101 is constant and the housings for the protruding edges B of the objects C are present along the entire length of the guide 101.

Figure 2 shows that the pushing device 100 further comprises pushing means 201. The pushing means 201 are translatable along a first translation direction T1 so as to be approached to and/or distanced from the first guide 101 and thus to/from the objects C housed in the first guide 101. The pushing means 201 can be approached to the first guide 101 along the translation direction T1 until they touch one of the objects C housed in the first guide 101. The pushing means 201 are also translatable along the first predetermined displacement direction D1. In this way, when the pushing means 201 are touching one of the objects C housed in the guide and are translated along the first predetermined displacement direction D1 towards the exit of the pushing device 100, they push the object C touched and all of the objects C of the row F1 downstream thereof along this direction.

As can be seen from figures 3A and 3B, the first translation direction T1 of the pushing means 201 is perpendicular with respect to the first predetermined displacement direction D1 so that the pushing means approach the first guide 101 from above. In particular, the pushing means 201 are arranged above the first guide 101 and are approached to it by lowering them. On the other hand, in order to distance the pushing means 201 from the first guide 101 they are lifted. The movement of the pushing means along the direction T1 can be carried out pneumatically, for example by means of a hydraulic cylinder that is moved through pressurised air. Figure 3A shows a configuration in which the pushing means 201 are distanced from the first guide 101 and therefore do not touch the objects C housed in the first guide 101. Figure 3B, on the other hand, shows a configuration in which the pushing means 201 have been approached to the first guide 101 so as to touch one of the objects C housed in the first guide 101.

The pushing means 201 are configured so as to engage the protruding edge B of the objects C so that when the pushing means are approached to the first guide 101, the pushing means 201 only touch one of the objects oriented with the protruding edge facing towards the pushing means and do not touch the objects oriented with the protruding edge facing in the opposite direction with respect to the pushing means 201. In particular, figures 3A and 3B show that the pushing means 201 comprise a fork comprising two teeth 201a and 201b in which the lateral distance D between the two teeth 201a and 201b is greater than the width of the second end C2 of the objects C and smaller than the width of the first end C1. When the pushing means 201 are lowered along the direction T1 towards the first guide 101, the teeth 201a and 201b of the fork only touch one of the objects C of the row F1 arranged with the first end C1 upwards, i.e. towards the fork as shown in figure 3B. The objects C of the row F1 with the second end C2 oriented upwards pass between the teeth 201a and 201b and are not touched by them. In this way, it is ensured that the first object C of the group of objects that are pushed by the pushing device 100 towards the package P is an object oriented with the first end C1 facing upwards.

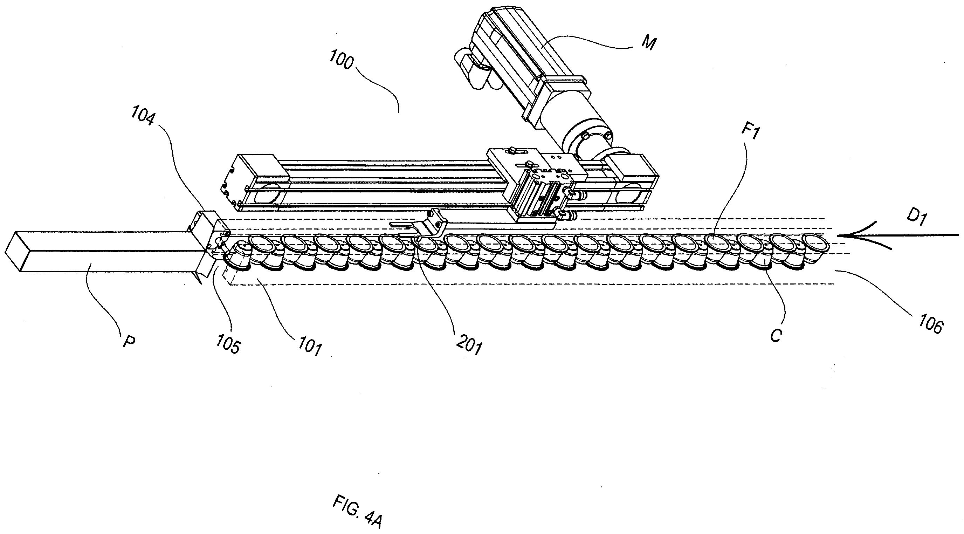

Hereinafter the various operating steps of the pushing device 100 of figure 2 are described with reference to figures 4A to 4F.

Figure 4A shows that the row F1 of objects C is accumulated along the first guide 101 of the pushing device 100. The system comprises blocking means 104 arranged in proximity of the downstream exit 105 of the first guide 101. The blocking means 104, for example one or more bars, are adapted for blocking the sliding of the objects C along the first guide 101. In the configuration shown in figure 4A the blocking means 104 are arranged laterally with respect to the first guide 101. The blocking means could, however, also be arranged above or below the first guide 101. The movement of the blocking means 104 can be carried out pneumatically, for example through one or more hydraulic cylinders moved by means of pressurised air. In the configuration shown in figure 4A the blocking means 104 are closed so that objects C cannot come out from the downstream exit 105 of the first guide 101. The objects C arriving from the input 106 of the first guide 101 thus accumulate along the guide 101 forming the row F1. The objects C can be accumulated in this way thanks to advancing means not shown in the figures and adapted for advancing the objects C along the predetermined displacement direction D1 in the first guide 101. The advancing means can for example comprise one or more nozzles for blowing pressurised air so as to push the objects C along the direction D1 towards the downstream exit 105 of the first guide thanks to the gusts of air. Alternatively or in addition to this, the bottom of the first guide 101 can be movable along the displacement direction D1, for example it can comprise a sliding conveyor belt, and the surface of the bottom of the first guide 101 can be configured so as to drag the objects C in the displacement by means of friction. For example, the surface of the bottom of the first guide 101 can be knurled. In this way, the objects C are pushed towards the downstream exit 105 of the first guide through the movement of the bottom of the first guide 101.

In the configuration of figure 4A the pushing means 201 are distanced from the first guide 101 and thus from the objects C of the row F1 housed in the first guide 101. The figure also shows that the system comprises actuation means, for example an electric motor M, to carry out the movement of the pushing means 201.

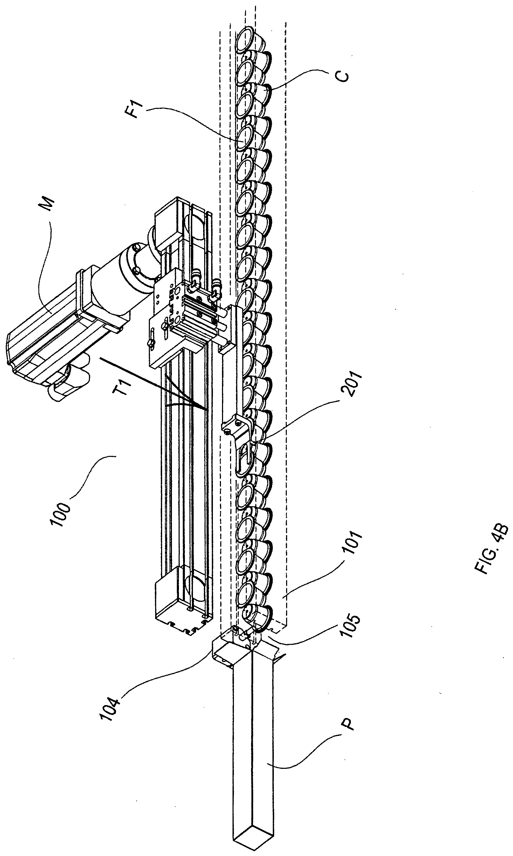

Figure 4B shows that the pushing means 201 are translated along the translation direction T1 so as to be approached to the objects C housed in the guide 101. In the case shown in the figures, the pushing means 201 are lowered. The pushing means touch one of the objects C of the row F1, in particular one of the objects C oriented with the first end C1 facing towards the pushing means 201, i.e. upwards. In the example shown in the figures, the pushing means 201 touch the tenth object C from the downstream exit 105 of the guide 101. The pushing means can alternately touch the objects occupying a different position from the tenth in the row F1 from the exit 105: this is controlled by controlling the position of the pushing means 201 along the direction D1 when they are approached to the guide through the movement along the direction T1.

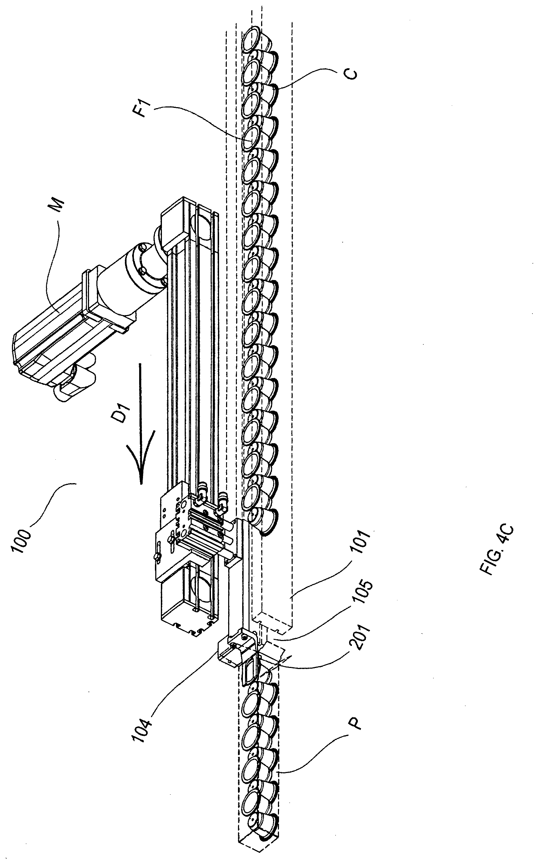

Figure 4C shows that the blocking means 104 have been opened so as to free the downstream exit 105 of the guide 101 and the pushing means 201, lowered and touching one of the objects C, have been translated along the direction D1 so as to push the ten objects C inside the package P arranged at the exit 105. At the end of the stroke the pushing means 201 project forwards, at least partially, with respect to the exit 105 of the guide 101. Moreover, a front portion of the pushing means 201 is inside the package P.

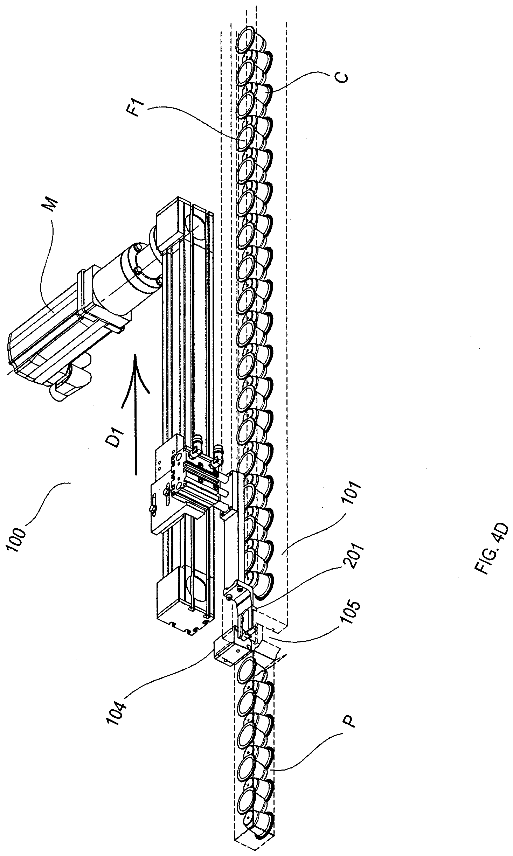

Figure 4D shows that the pushing means 201 have been translated along the direction D1 but the opposite way with respect to the translation carried out in figure 4C so as to make the pushing means 201 completely come out from the package P. The pushing means 201 are thus withdrawn with respect to the exit 105 of the guide 101. It should also be observed that meanwhile the blocking means 104 have been closed again and the objects C have begun to accumulate again in the action area of the pushing means 201.

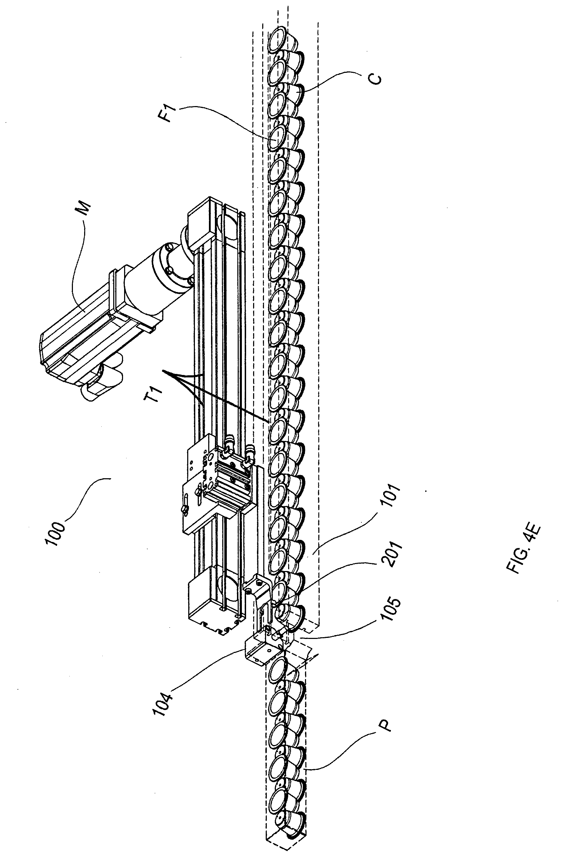

Figure 4E shows that the objects C have accumulated at the blocking means 104 as shown earlier in figure 4A. The pushing means 201 are translated along the direction T1 but the opposite way with respect to the translation shown in figure 4B. In this way, the pushing means 201 are distanced from the first guide 101 and thus from the objects C of the row F1 housed in the first guide 101.

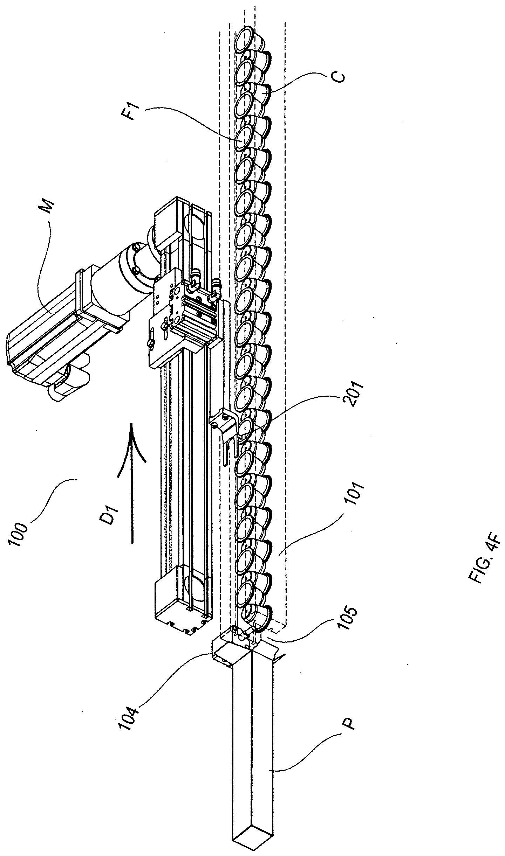

Figure 4F shows that the pushing means 201, after having been distanced from the objects C of the row F1, are translated along the direction D1 but the opposite way with respect to the translation shown in figure 4D so as to go back into the starting position as shown in figure 4A. At the same time, a new package P has been carried to the exit 105 of the guide 101.

The cycle then proceeds again from the step shown in figure 4A so as to fill the new package P. The cycle thus repeats many times so as to fill many packages P.

The movements of the various elements of the system as described with reference to figures 4A to 4F are suitably coordinated, for example through a control unit that is suitably programmed and not shown in the figures. The control unit manages the movement of all of the elements so as to ensure the operation as described with reference to figures 4A to 4F.

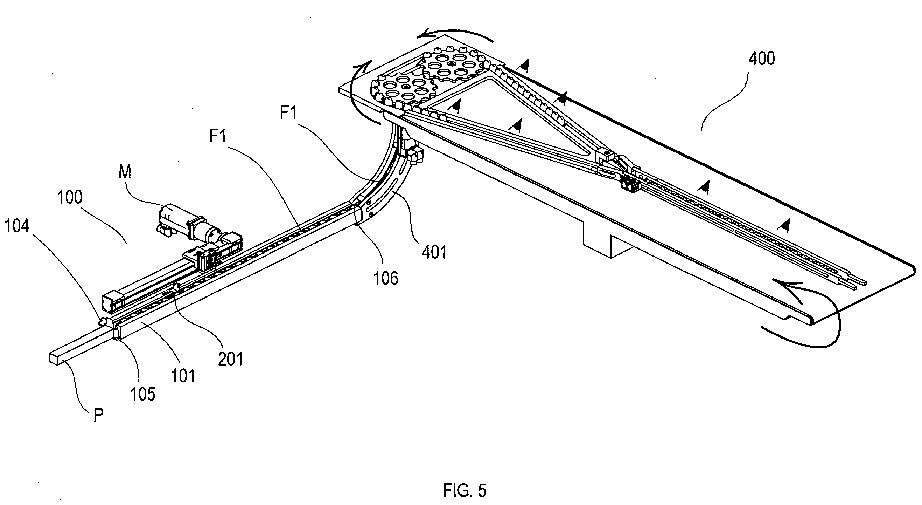

Figure 5 schematically shows a system comprising an arranging machine 400 and a pushing device 100 like that of figure 2 coupled. A package P is also shown at the exit 105 of the pushing device 100. The packaging device can be provided by a cartoning machine not shown in the figures. An arranger like the arranging machine 400 shown in figure 5 has been described in European patent application No. 15182748.2 which should be referred to for the detailed description of the components and of the operation of the arranging machine 400. Instead of the arranging machine 400 shown in the figures, the system can be provided with other types of arrangers, for example arrangers like those described in Italian patent application No. BO2014A000541 or in European patent application No. 15182748.2. The exit of the arranging machine 400 is coupled with the pushing device 100 through the coupling guide 401. In particular, the row F1 of objects arranged in an alternate manner obtained by means of the arranging machine 400 enters into the first guide 101 of the pushing device 100 through the coupling guide 401. The exit of the coupling guide 401 is indeed coupled with the upstream input 106 of the first guide 101. The objects C that fall by gravity from the arranging machine 400 after having been arranged along the row F1 in an alternate manner slide along the coupling guide 401 and enter into the first guide 101 of the pushing device 100. The coupling guide 401 is curved so as to modify the orientation of the row F1 from vertical, as obtained in output from the arranging machine 400, to horizontal, to be able to be introduced into the guide 101 that is arranged horizontally. Once they have entered into the guide 101 of the pushing device 100, the objects C of the row F1 can be moved so as to reach the action area of the pushing means 201 and thus so as to accumulate close to the exit 105 of the guide as described above with reference to figures 4A to 4F.

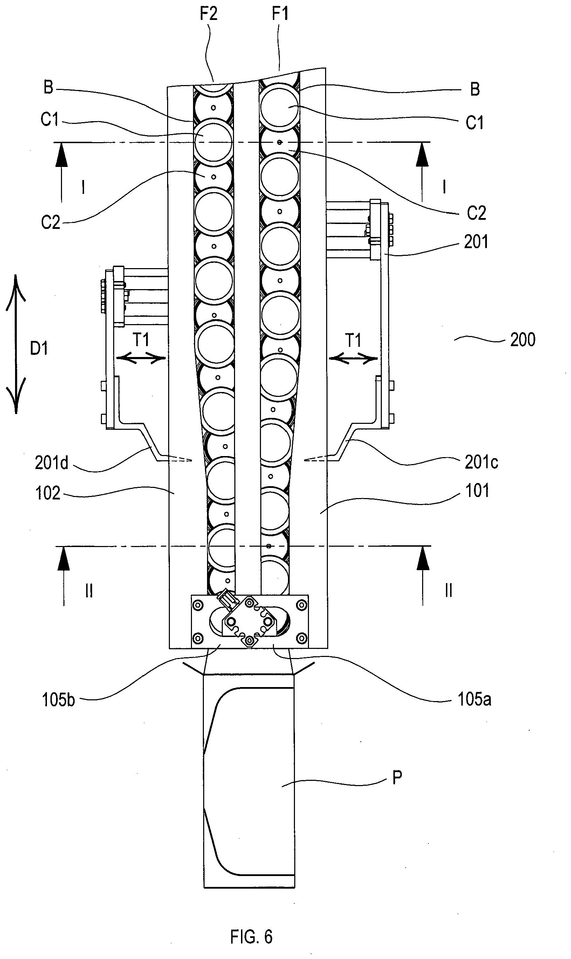

Figure 6 schematically shows a view from above of a pushing device 200 according to a further embodiment of the invention. The pushing device 200 comprises a first guide 101 for the sliding of the objects C along a first predetermined displacement direction D1. In the view from above of figure 6 the direction D1 is vertical as shown by the arrow and the advancing direction of the system is from the top towards the bottom of the figure. Moreover, the pushing device 200 of figure 6 further comprises a second guide 102 arranged laterally and adjacent to the first guide 101 and parallel to the first guide 101.

As can be seen in the figures, the objects C are arranged in an alternate manner in the two rows F1 and F2. In particular, it can be seen that the row F1 is housed in the first guide 101 and comprises objects C with the first end C1 with the protruding edge B facing upwards alternated with objects with the second end C2 facing upwards and thus with the first end C1 with the protruding edge B facing downwards. Similarly, the second row F2 is housed in the second guide 102 and comprises objects C with the first end C1 with the protruding edge B facing upwards alternated with objects with the second end C2 facing upwards and thus with the first end C1 with the protruding edge B facing downwards.

The pushing device 200 allows the displacement and the consequent insertion of a predetermined number N of objects C of the row F1 and of the row F2 in the package P shown at the bottom in the figures. The package P is open and positioned so as to receive the objects of the rows F1 and F2 pushed by the pushing device. The package P can for example be provided with a cartoning machine coupled with the pushing device. In this case, the package P is sufficiently wide as to be able to accommodate two parallel rows of objects C.

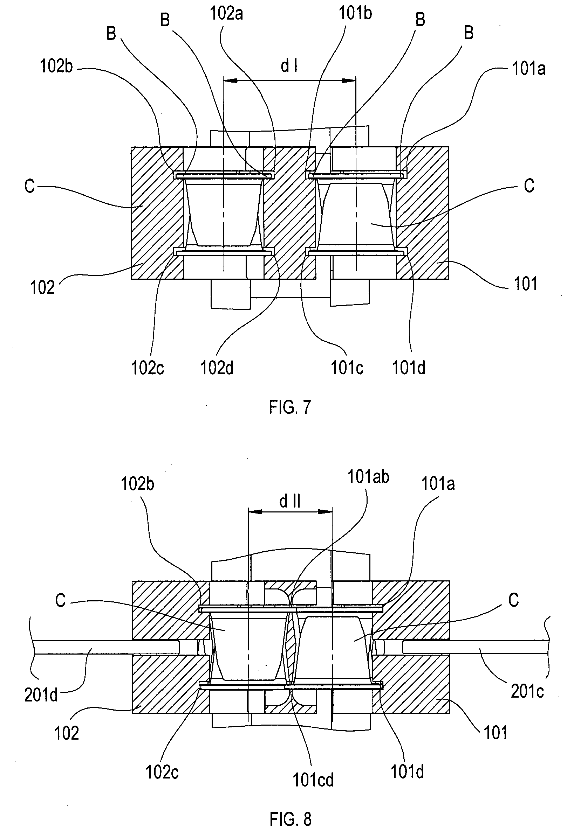

Figures 7 and 8 schematically show section views along the lines I-I and II-II, respectively, of Figure 6. Figure 7 shows a vertical section in a region upstream of the pushing device 200. It should be observed that in this region the first guide 101 comprises the four housings 101a, 101b, 101c and 101d adapted for accommodating the protruding edge B of the objects C of the row F1 during the displacement similarly to what is described with reference to figures 3A and 3B. Moreover, figure 7 shows that the second guide 102 comprises the four housings 102a, 102b, 102c and 102d, for example slits. The protruding edge B of the objects C of the row F2 thus slides inside the four housings. The first housing 102a is in the upper part of the right side of the second guide 102. The second housing 102b is in the upper part of the left side of the second guide 102. In particular, the first housing 102a and the second housing 102b are side by side at the same first level with respect to the bottom of the guide 102 so as to house the protruding edge B of the objects C of the row F2 oriented with the first end C1 facing upwards. The third housing 102c is in the lower part of the left side of the second guide 102. The fourth housing 102d is in the lower part of the right side of the second guide 102. In particular, the third housing 102a and the fourth housing 102d are side by side at the same second level with respect to the bottom of the second guide 102 so as to house the protruding edge B of the objects C of the row F2 oriented with the first end C1 facing downwards.

Figure 8 shows the section of the system in a region downstream of the pushing device 200. From the figure it can be seen that the outer side walls of the first guide 101 and of the second guide 102 have a greater thickness with respect to the thickness in the upstream region shown in figure 7. Moreover, the central wall that divides the two guides 101 and 102 is narrower with respect to the thickness that it has in the upstream region shown in figure 7. In this way, during the advancing of the two rows F1 and F2 along the two guides 101 and 102, the lateral distance between the two rows reduces from dl (figure 7) to dll (figure 8) so as to be able to insert the two parallel rows in the package P. The increase in thickness of the outer side walls of the first guide and of the second guide is also visible in figure 6. In this embodiment, the housings for the protruding edges B of the objects C present along the entire length of the guides 101 and 102 are the housings 101a and 101d of the first guide 101 and the housings 102b and 102c of the second guide 102, i.e. the housings made in the outer side walls of the two guides. Due to the narrowing of the central wall between the two guides 101 and 102, in the last portion downstream of the system the housings 101b and 102a are joined together in a single housing 101ab. Similarly, the housings 101c and 102d are joined together in a single housing 101cd. In practice, the three upper, central and lower portions of the central wall between the two guides 101 and 102 visible in figure 8 project canti-levered with respect to the portion upstream of the central wall so as to make the housings 101ab and 101cd.

Figure 6 shows that the pushing device 200 further comprises pushing means 201. The pushing means 201 are translatable along a first translation direction T1 so as to be approached and/or distanced to/from the first guide 101 and to/from the second guide 102 so that the pushing means 201 touch not only one of the objects C housed in the first guide 101, but also one of the objects C housed in the second guide 102. The pushing means 201 of the pushing device 200 are arranged laterally with respect to the guides 101 and 102. In particular, the pushing means 201 comprise a first bar 201c to the right of the first guide 101 and a second bar 201d to the left of the second guide 102. The first bar 201c can be approached to the first guide 101 along the translation direction T1 until it touches one of the objects C housed in the first guide 101. The second bar 201d can be approached to the second guide 102 along the translation direction T1 until it touches one of the objects C housed in the second guide 102. Advantageously, the translations of the two bars are coordinated so that when the first bar 201c is approached to the first guide 101 the second bar 201d is also approached to the second guide 102 and, vice-versa, when the first bar 201c is distanced from the first guide 101 the second bar 201d is also distanced from the second guide 102. Figure 8 shows that in the action area of the pushing means 201 the outer side walls of the first guide and of the second guide are provided with through slits that make it possible to house the first and the second bar 201c and 201d, respectively, so as to allow the ends of the bars to reach the objects C housed in the guides 101 and 102. From figure 6 it can also be seen that the bars 201c and 201d seen from above are not rectilinear by have a shape like an open broken line so as to have a portion that projects forwards in the advancing direction in the area in which the lateral distance between the ends of the two bars is minimal.

The pushing means 201 are also translatable along the first predetermined displacement direction D1. In this way, when the pushing means 201 are touching one of the objects C housed in the first guide 101 and one of the objects housed in the second guide 102 and are translated along the first predetermined displacement direction D1 towards the exit 105 of the pushing device 200, they push the two objects C touched and all of the objects C of the rows F1 and F2 downstream of them along this direction.

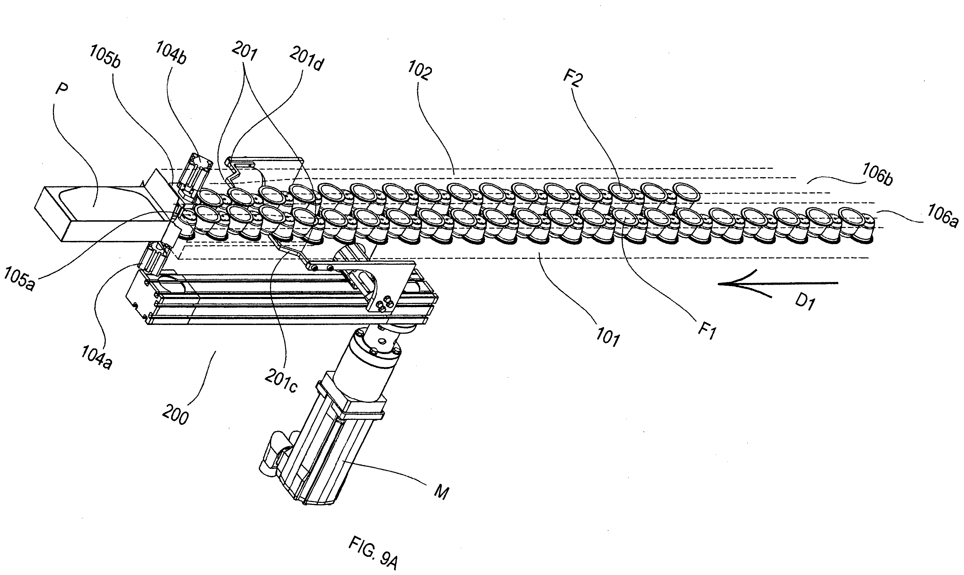

Hereinafter, the various operating steps of the pushing device 200 of figure 6 are described with reference to figures 9A to 9F.

Figure 9A shows that the row F1 of objects C is accumulated along the first guide 101 of the pushing device 200 while the row F2 of objects C is accumulated along the second guide 102 of the pushing device 200. The system comprises blocking means 104a arranged in proximity of the downstream exit 105a of the first guide 101 and blocking means 104b arranged in proximity of the downstream exit 105b of the second guide 102. The blocking means 104a, for example one or more bars, are adapted for blocking the sliding of the objects C along the first guide 101. The blocking means 104b, for example one or more bars, are adapted for blocking the sliding of the objects C along the second guide 102. In the case shown in the figure, the blocking means 104a are arranged beneath the first guide 101 and are closed through upward translation whereas the blocking means 104b are arranged above the second guide 102 and are closed through downward translation. In the configuration shown in figure 9A, the blocking means 104a and 104b are closed so that objects C cannot come out from the downstream exits 105a and 105b of the first guide 101 and of the second guide 102, respectively. The objects C arriving from the entrance 106a of the first guide 101 thus accumulate along the guide 101 forming the row F1. The objects C arriving from the entrance 106b of the second guide 101 thus accumulate along the guide 102 forming the row F2. The objects C can be accumulated in this way thanks to advancing means not shown in the figures and adapted for advancing the objects C along the predetermined displacement direction D1 in the first guide 101 and in the second guide 102. The advancing means can for example comprise one or more nozzles for blowing pressurised air so as to push the objects C along the direction D1 towards the downstream exits 105a and 105b of the first guide and of the second guide, respectively, thanks to the gusts of air. Alternatively or in addition to this, the bottom of the first guide 101 and/or the bottom of the second guide 102 can be movable along the displacement direction D1, for example it can comprise a sliding conveyor belt, and the surface of the bottom of the first guide 101 and/or that of the bottom of the second guide 102 can be configured so as to drag the objects C in the displacement by means of friction. For example, the surface of the bottom of the first guide 101 and/or of the second guide 102 can be knurled. In this way, the objects C are pushed towards the downstream exits 105a and 105b through the movement of the bottom of the two guides.

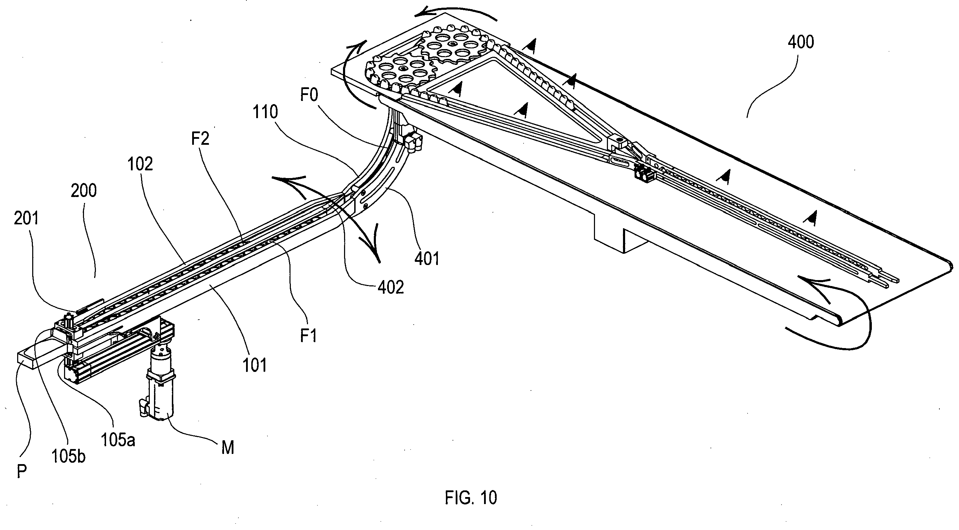

As can be seen both in figure 9A and in figure 6, the rows F1 and F2 are offset, i.e. the same positions in the two rows are occupied by objects C having different orientations. For example, the first position from the exits 105a and 105b of the guides 101 and 102 is occupied by an object C with the first end C1 facing upwards in the row F1, whereas it is occupied by an object C with the second end C2 facing upwards in the row F2 (see figure 6). The odd positions of the row F1 (the first, third, fifth position and so on) are occupied by objects C with the first end C1 facing upwards whereas the odd positions of the row F2 are occupied by objects C with the second end C2 facing upwards. Similarly, the even positions of the row F1 (the second, fourth, sixth position and so on) are occupied by objects C with the second end C2 facing upwards whereas the even positions of the row F2 are occupied by objects C with the first end C1 facing upwards. This offsetting between the two rows is advantageous for different reasons. Firstly, the space occupied by the two parallel rows of objects inside the package P is further minimised given that it is not just the length of the row that is minimised thanks to the alternate orientation of the objects along each row, but the width occupied by the two parallel rows is also minimised thanks to the offsetting between the two rows. Moreover, as can be seen from figure 6 and figure 8, the offsetting between the two rows makes it possible to bring together the two rows while they slide along the guides 101 and 102 without the adjacent objects of the two rows interfering with each other, for example blocking the stroke. In particular, with reference to figure 8, the left side of the protruding edge B of the object C arranged in the guide 101 is housed in the housing 101cd given that this object is oriented with the first end C1 downwards. At the same time, the right side of the protruding edge B of the object C arranged in the guide 102 and occupying the same position in the row F2 as that occupied by the object C in the row F1 is housed in the housing 101ab given that this object is oriented with the first end C1 upwards. In this way, thanks to the offsetting between the two rows, it is ensured that the protruding edges B of the objects C in the two guides are always inside a housing in both sides of the guide and it is also ensured that the protruding edges B of adjacent objects of the two rows do not interfere with each other. In order to obtain the offsetting between the two rows, entrances 106a and 106b of the guides 101 and 102 can be made upstream. For example, it is ensured that the first object that enters into the entrance 106a of the guide 101 has opposite orientation with respect to the first object that enters into the entrance 106b of the guide 102. This can be obtained for example if the two rows F1 and F2 are obtained from a single row F0 that is divided into two rows F1 and F2 by directing means 402 (see figure 10). The directing means 402 are operated so that the first object that enters into the entrance 106a of the guide 101 has the opposite orientation with respect to the first object that enters into the entrance 106b of the guide 102. Upstream of the directing means 402 it is possible for example to place blocking means not shown in the figures and adapted for blocking only the objects that have a certain orientation, for example only the objects with the first end C1 facing upwards. When the blocking means are activated, an object with this predetermined orientation is thus held and a row of objects can thus be directed the first position of which is occupied by an object with this orientation towards the desired guide.

In the configuration of figure 9A the pushing means 201 are distanced both from the first guide 101 and from the second guide 102. In particular, the first bar 201c is distanced from the first guide 101 and thus from the objects C of the row F1 housed in the first guide 101, the second bar 201d is distanced from the second guide 102 and thus from the objects C of the row F2 housed in the second guide 102. The figure also shows that the system comprises actuation means, for example an electric motor M, for actuating the movement of the pushing means 201.

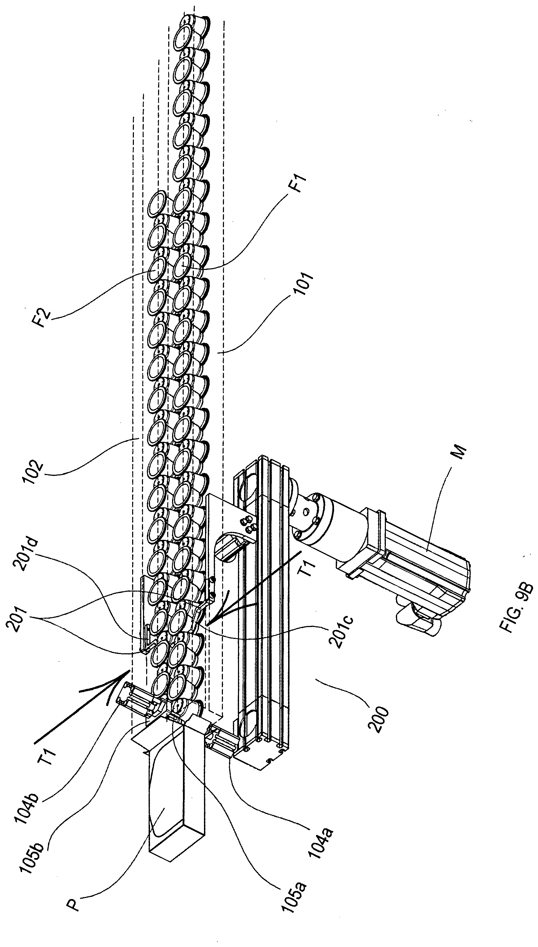

Figure 9B shows that the pushing means 201 are translated along the translation direction T1 so as to be approached to the objects C housed in the guide 101 and in the guide 102. In particular, the first bar 201c is approached to the first guide 101 and thus to the objects C of the row F1 housed in the first guide 101 through a translation in direction T1 from right towards left. The second bar 201d is approached to the second guide 102 and thus to the objects C of the row F2 housed in the second guide 102 through a translation in direction T1 from left towards right. The bar 201c touches one of the objects C of the first row F1, in particular the fifth object counting from the exit 105a, whereas the bar 201d touches one of the objects C of the second row F2, in particular the fifth object starting from the exit 105b.

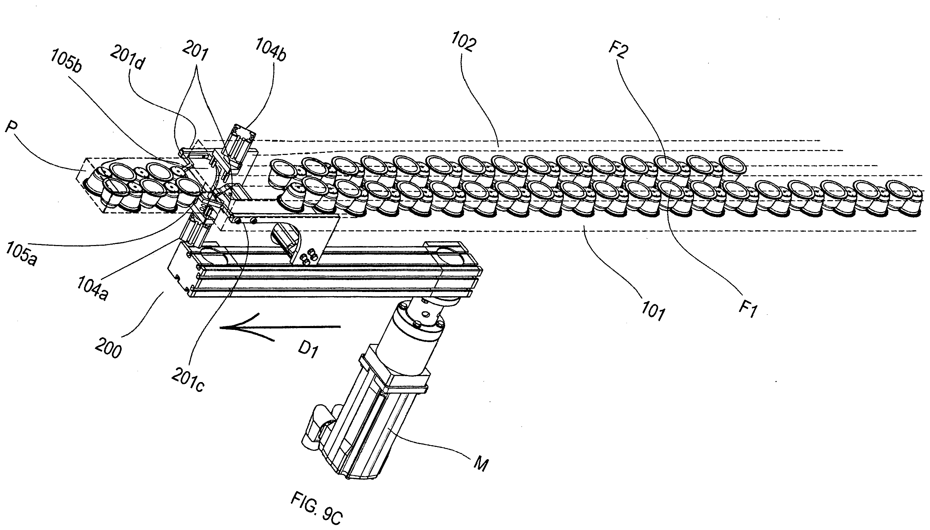

Figure 9C shows that the blocking means 104a and 104b have been opened so as to free the downstream exits 105a and 105b of the guides 101 and 102. Moreover, the pushing means 201 have been translated along the direction D1 so as to push the ten objects C inside the package P arranged at the exits 105a and 105b. At the end of the stroke the protruding portion of the bars 201c and 201d projects forwards with respect to the exits 105a and 105b of the guides 101 and 102. Moreover, the protruding portion of the bars 201c and 201d is inside the package P.

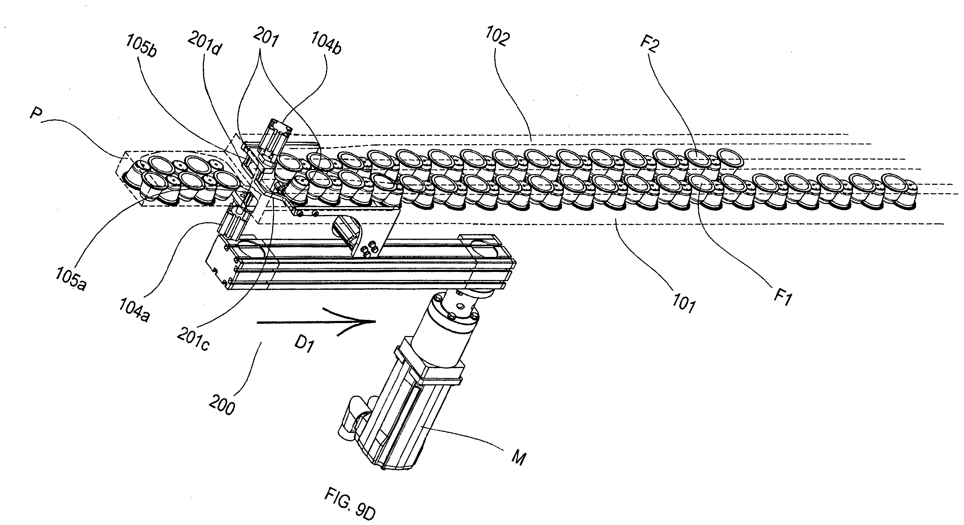

Figure 9D shows that the pushing means 201 have been translated along the direction D1 but the opposite way with respect to the translation carried out in figure 9C so as to make the pushing means 201 come completely out from the package P. The pushing means 201 are thus withdrawn with respect to the exits 105a and 105b of the guides 101 and 102. It should also be observed that meanwhile the blocking means 104a and 104b have once again been closed and the objects C have begun to accumulate again in the action area of the pushing means 201, both in the guide 101 and in the guide 102.

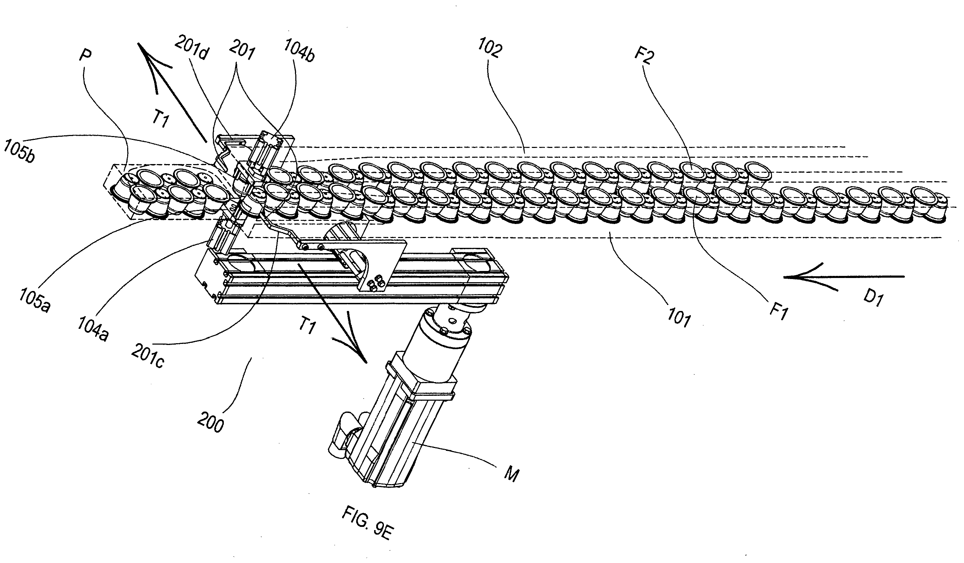

Figure 9E shows that the objects C have accumulated at the blocking means 104a and 104b as shown earlier in figure 9A. The pushing means 201 are translated along the direction T1 but the opposite way with respect to the translation shown in figure 9B. In particular, the bar 201c is translated from left towards right so as to be distanced from the first guide 101. The bar 201d is translated from right towards left so as to be distanced from the second guide 102.

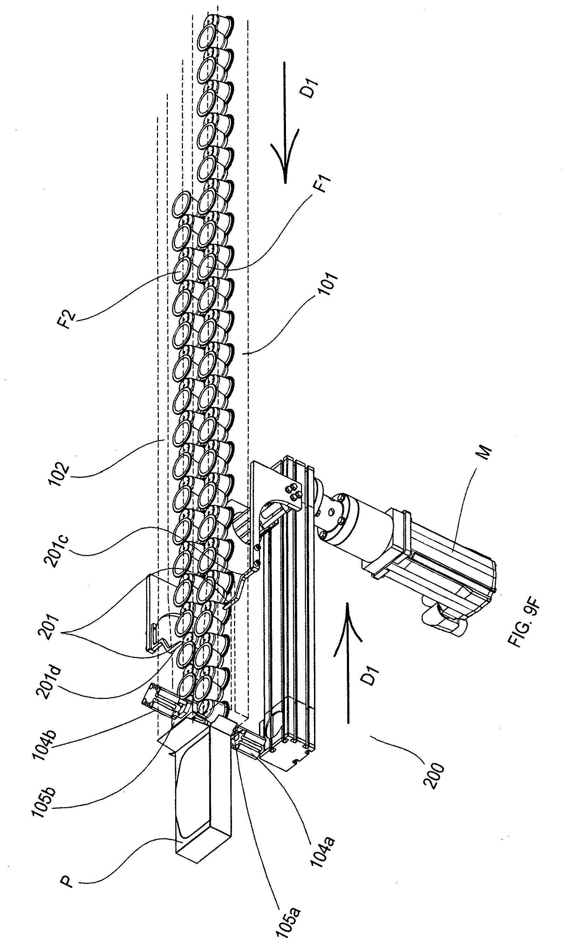

Figure 9F shows that the pushing means 201, after having been distanced from the objects C of the rows F1 and F2, are translated along the direction D1 but the opposite way with respect to the translation shown in figure 9C so as to go back into the starting position as shown in figure 9A. At the same time, a new package P has been brought to the exits 105a and 105b of the guides 101 and 102.

The cycle thus proceeds again from the step shown in figure 9A so as to fill the new package P. The cycle thus repeats many times so as to fill many packages P.

The movements of the various elements of the system as described with reference to figures 9A to 9F are suitably coordinated, for example through a control unit that is suitably programmed and not shown in the figures. The control unit manages the movement of all of the elements so as to ensure the operation as described with reference to figures 9A to 9F.

Figure 10 schematically shows a system comprising an arranging machine 400 and a pushing device 200 like that of figure 6 coupled together. A package P is also shown at the exits 105a and 105b of the guides 101 and 102, respectively, of the pushing device 200. The package can be provided by a cartoning machine not shown in the figure. An arranging machine like the arranging machine 400 shown in figure 10 has been described in European patent application No. 15182748.2 to which we refer for the detailed description of the components and of the operation of the arranging machine 400. The exit of the arranging machine 400 is coupled with the pushing device 200 through the coupling guide 401 and directing means 402, for example a movable lever as shown schematically in the figure. In particular, a row F0 of objects arranged in an alternate manner obtained by means of the arranging machine 400 in output from the coupling guide 401 is divided into the rows F1 and F2 that enter into the first guide 101 and into the second guide 102, respectively, of the pushing device 200 by means of the directing means 402 that are movable so as to direct the objects C of the row F0 alternately towards the first guide 101 or the second guide 102. The objects C that fall by gravity from the arranging machine 400 after having been arranged along the row F0 in an alternate manner slide along the coupling guide 401 and enter into the first guide 101 or into the second guide 102 based on the position of the directing means 402. The coupling guide 402 is curved so as to change the orientation of the row F0 from vertical, as obtained in output from the arranging machine 400, to horizontal, in order to be able to be introduced into the guides 101 and 102 that are arranged horizontally. Once they have entered into the guides 101 and 102 of the pushing device 200, the objects C of the rows F1 and F2 can be moved so as to reach the action area of the pushing means 201 and thus so as to accumulate in the vicinity of the exits 105a and 105b of the guides 101 and 102 as described above with reference to figures 9A to 9F.

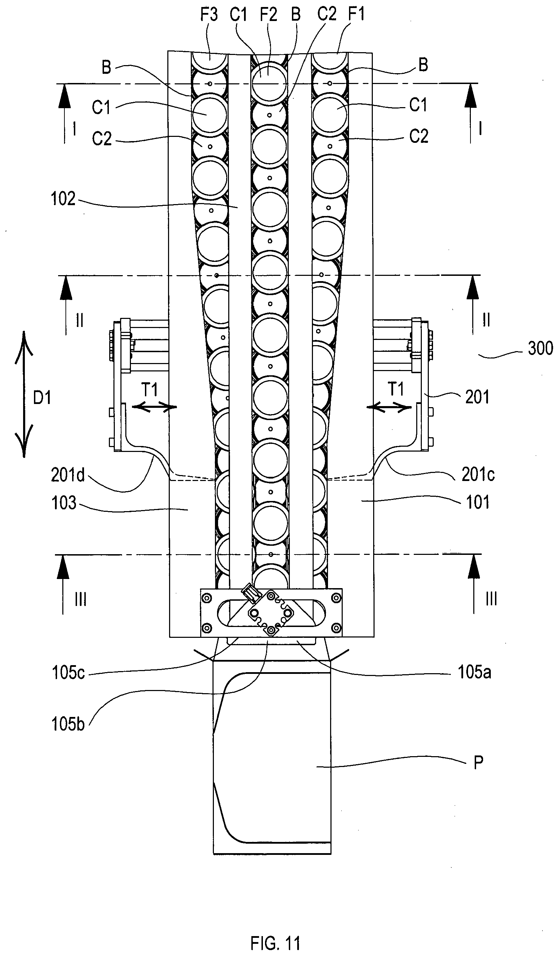

Figure 11 schematically shows a view from above of a pushing device 300 according to a further embodiment of the invention. The pushing device 300 comprises a first guide 101 for the sliding of the objects C along a first predetermined displacement direction D1. In the view from above of figure 11, the direction D1 is vertical as shown by the arrow and the advancing direction of the system is from the top towards the bottom of the figure. Moreover, the pushing device 300 of figure 11 further comprises a second guide 102 arranged laterally and adjacent to the first guide 101 and parallel to the first guide 101 and a third guide 103 arranged laterally and adjacent to the second guide 102.

As can be seen in the figure, the objects C are arranged in an alternate manner in the three rows F1, F2 and F3 housed in the three guides 101, 102 and 103, respectively.

The pushing device 300 allows the displacement and the consequent insertion of a predetermined number N of objects C of the row F1, of the row F2 and of the row F3 in the package P shown at the bottom of the figure. The package P is open and is positioned so as to receive the objects of the rows F1, F2 and F3 pushed by the pushing device. The package P can for example be provided with a cartoning machine coupled with the pushing device. In this case, the package P is sufficiently wide as to be able to house three parallel rows of objects C.

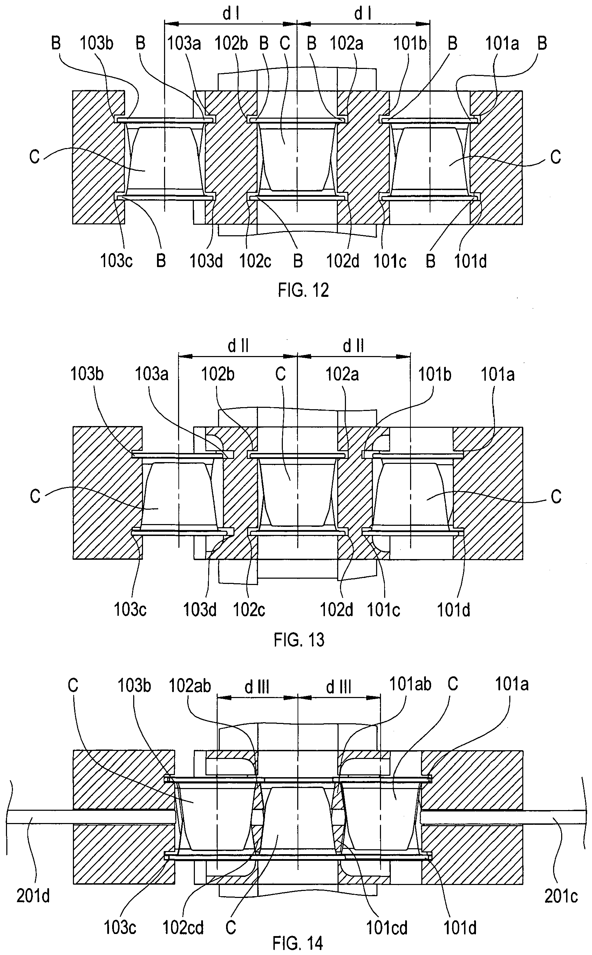

Figures 12, 13 and 14 schematically show section views along the lines I-I, II-II and III-III, respectively, of Figure 11. Figure 12 shows a vertical section in a region upstream of the pushing device 300. It should be observed that in this region the first guide 101 comprises the four housings 101a, 101b, 101c and 101d adapted for housing the protruding edge B of the objects C of the row F1 during the displacement similarly to what is described with reference to figures 3A and 3B. Moreover, figure 12 shows that the second guide 102 comprises the four housings 102a, 102b, 102c and 102d, for example slits, adapted for housing the protruding edge B of the objects C of the row F2 during the displacement similarly to what is described with reference to figure 7. Finally, figure 12 shows that the third guide 103 comprises the four housings 103a, 103b, 103c and 103d, for example slits, adapted for housing the protruding edge B of the objects C of the row F3 during the displacement. The protruding edge B of the objects C of the row F3 thus slides inside the four housings. The first housing 103a is in the upper part of the right side of the third guide 103. The second housing 103b is in the upper part of the left side of the third guide 103. In particular, the first housing 103a and the second housing 103b are side by side at the same first level with respect to the bottom of the guide 103 so as to house the protruding edge B of the objects C of the row F3 oriented with the first end C1 facing upwards. The third housing 103c is in the lower part of the left side of the third guide 103. The fourth housing 103d is in the lower part of the right side of the third guide 103. In particular, the third housing 103a and the fourth housing 103d are side by side at the same second level with respect to the bottom of the third guide 103 so as to house the protruding edge B of the objects C of the row F3 oriented with the first end C1 facing downwards.

Figure 13 shows the section of the system in an intermediate region of the pushing device 300. From the figure it can be seen that the outer side walls of the first guide 101 and of the third guide 103 have a greater thickness with respect to the thickness in the upstream region shown in figure 12. Moreover, the central walls that divide the guide 101 from the guide 102 and the guide 102 from the guide 103 are narrower with respect to the thickness that they have in the upstream region shown in figure 12. However, it should be observed that in this region each of the three guides 101, 102 and 103 comprises the four housings even if, with respect to the region shown in figure 12, the lateral distance between the housings 101b and 102a, 102b and 103a, 101c and 102d and 102c and 103d is reduced.

Figure 14 shows the section of the system in a region downstream of the pushing device 300. From the figure it can be seen that the outer side walls of the first guide 101 and of the third guide 103 have an even greater thickness with respect to the thickness in the intermediate region shown in figure 13. Moreover, the central walls that divide the guide 101 from the guide 102 and the guide 102 from the guide 103 are further narrowed. In this way, during the advancing of the three rows F1, F2 and F3 along the three guides, the lateral distance between the three rows reduces (from dl in figure 12 to dll in figure 13 to dill in figure 14) so as to be able to insert the three parallel rows in the package P. The increase in the thickness of the outer side walls of the first guide and of the third guide is also visible in figure 11. In this embodiment, the housings for the protruding edges B of the objects C present along the entire length of the guides 101 and 103 are the housings 101a and 101d of the first guide 101 and the housings 103b and 103c of the third guide 103, i.e. the housings made in the outer side walls of the two guides. Due to the narrowing of the central walls between the two guides 101 and 102, in the last portion downstream of the system the housings 101b and 102a join together in a single housing 101ab. Similarly, the housings 101c and 102d join together in a single housing 101cd. In practice, the three upper, central and lower portions of the central wall between the two guides 101 and 102 visible in figure 14 project canti-levered with respect to the portion upstream of the central wall so as to make the housings 101ab and 101cd. Similarly, due to the narrowing of the central walls between the two guides 102 and 103, in the last portion downstream of the system the housings 102b and 103a join together in a single housing 102ab. Similarly, the housings 102c and 102d join together in a single housing 102cd. In practice, the three upper, central and lower portions of the central wall between the two guides 102 and 103 visible in figure 14 project canti-levered with respect to the portion upstream of the central wall so as to make the housings 102ab and 102cd.

Figure 11 shows that the pushing device 300 further comprises pushing means 201. The pushing means 201 are translatable along a first translation direction T1 so as to be approached to and/or distanced from the first guide 101, the second guide 102 and the third guide 103 so that the pushing means 201 touch not only one of the objects C housed in the first guide 101, but also one of the objects C housed in the second guide 102 and one of the objects C housed in the third guide 103. The pushing means 201 of the pushing device 300 are arranged laterally with respect to the guides 101 and 103. In particular, the pushing means 201 comprise a first bar 201c to the right of the first guide 101 and a second bar 201d to the left of the third guide 103. The first bar 201c can be approached to the first guide 101 along the translation direction T1 until it touches one of the objects C housed in the first guide 101. The second bar 201d can be approached to the third guide 103 along the translation direction T1 until it touches one of the objects C housed in the third guide 103. Moreover, after the approach, at least one or both of the two bars 201c and 201d touches one of the objects C housed in the second guide 102. Advantageously, the translations of the two bars are coordinated so that when the first bar 201c is approached to the first guide 101 the second bar 201d is also approached to the third guide 103 and, vice-versa, when the first bar 201c is distanced from the first guide 101 the second bar 201d is also distanced from the third guide 103. Figure 14 shows that in the action area of the pushing means 201 the outer side walls of the first guide and of the third guide and the central walls between the guides are provided with through slits that make it possible to house the first and the second bar 201c and 201d, respectively, so as to allow the ends of the bars to reach the objects C housed in the guides 101, 102 and 103. From figure 11 it can also be seen that the bars 201c and 201d seen from above are not rectilinear but have a shape like an open broken line so as to have a portion that projects forwards in the advancing direction in the area in which the lateral distance between the ends of the two bars is minimal.

The pushing means 201 are also translatable along the first predetermined displacement direction D1. In this way, when the pushing means 201 touch one of the objects C housed in the first guide 101, with one of the objects housed in the second guide 102 and with one of the objects housed in the third guide 103 and are translated along the first predetermined displacement direction D1 towards the exits 105a, 105b and 105c of the three guides of the pushing device 300, they push the three objects C touched and all of the objects C of the rows F1, F2 and F3 downstream thereof along this direction.

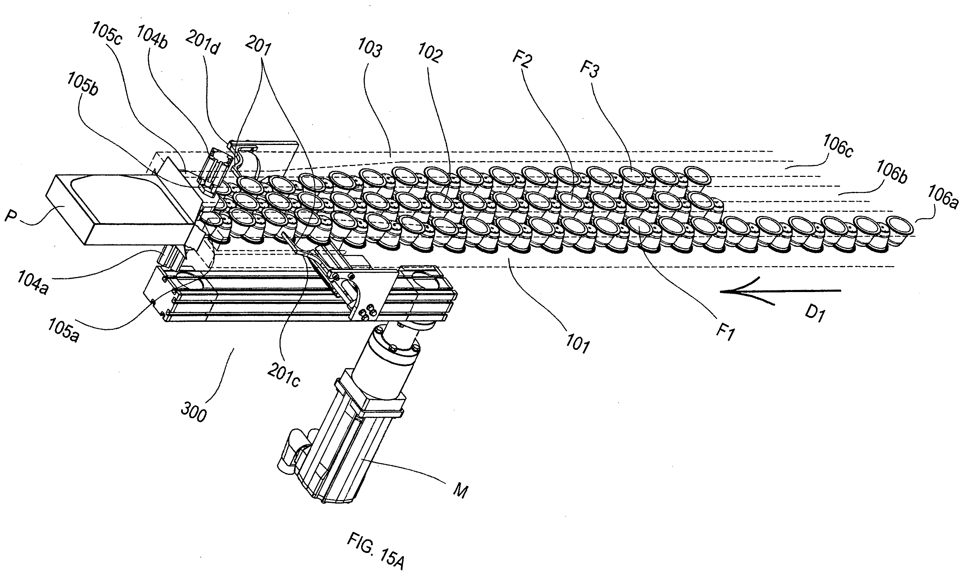

Hereinafter the various operating steps of the pushing device 300 of figure 11 are described with reference to figures 15A to 15F.

Figure 15A shows that the row F1 of objects C is accumulated along the first guide 101 of the pushing device 300 whereas the row F2 of objects C is accumulated along the second guide 102 of the pushing device 300 and the row F3 of objects is accumulated along the third guide 103. The system comprises blocking means 104a arranged in proximity of the downstream exit 105a of the first guide 101, blocking means 104b arranged in proximity of the downstream exit 105b of the second guide 102 and blocking means arranged in proximity of the downstream exit 105c of the third guide 103 (not visible in the figure since hidden from the package P). The blocking means 104a, for example one or more bars, are adapted for blocking the sliding of the objects C along the first guide 101. The blocking means 104b, for example one or more bars, are adapted for blocking the sliding of the objects C along the second guide 102. The blocking means of the third guide, for example one or more bars, are adapted for blocking the sliding of the objects C along the third guide 103. In the case shown in the figure, the blocking means 104a are arranged under the first guide 101 and are closed through upward translation whereas the blocking means 104b are arranged above the second guide 102 and are closed through translation downward. The blocking means of the third guide 103 are arranged below the third guide 103 and are closed through translation upward. In the configuration shown in figure 15A the three blocking means of the three guides are closed so that objects C cannot come out from the downstream exits 105a, 105b and 105c of the three guides. The objects C arriving from the entrance 106a of the first guide 101 thus accumulate along the guide 101 forming the row F1. The objects C arriving from the entrance 106b of the second guide 101 thus accumulate along the guide 102 forming the row F2. The objects C arriving from the entrance 106c of the third guide 103 thus accumulate along the guide 103 forming the row F3. The objects C can be accumulated in this way thanks to advancing means not shown in the figure and adapted for advancing the objects C along the predetermined displacement direction D1 in the three guides. The advancing means can for example comprise one or more nozzles for blowing pressurised air so as to push the objects C along the direction D1 towards the downstream exits 105a, 105b and 105c of the three guides thanks to gusts of air. Alternatively or in addition to this, the bottom of the three guides can be movable along the displacement direction D1, for example it can comprise a sliding conveyor belt, and the surface of the bottom can be configured so as to drag the objects C in the displacement by means of friction. For example, the surface of the bottom of the three guides can be knurled. In this way, the objects C are pushed towards the downstream exits 105a, 105b and 105c through the movement of the bottom of the two guides.

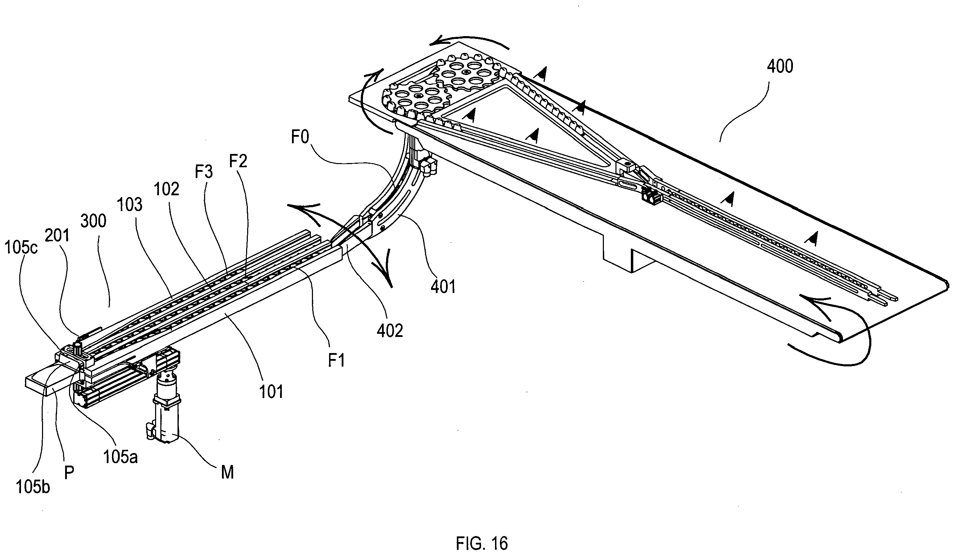

As can be seen both in figure 15A and in figure 11, the rows F1 and F2 are offset, i.e. the same positions in the two rows are occupied by objects C having different orientations. Moreover, the rows F2 and F3 are also offset so that, on the other hand, the rows F1 and F3 are in phase. For example, the first position starting from the exits 105a, 105b and 105c of the guides 101,102 and 103 is occupied by an object C with the first end C1 facing upwards in the rows F1 and F3, whereas it is occupied by an object C with the second end C2 facing upwards in the row F2. The odd positions of the row F1 and F3 (the first, third, fifth position and so on) are occupied by objects C with the first end C1 facing upwards whereas the odd positions of the row F2 are occupied by objects C with the second end C2 facing upwards. Similarly, the even positions of the rows F1 and F3 (the second, fourth, sixth position and so on) are occupied by objects C with the second end C2 facing upwards whereas the even positions of the row F2 are occupied by objects C with the first end C1 facing upwards. This offsetting between the pairs of adjacent rows is advantageous for various reasons. Firstly, the space occupied by the three parallel rows of objects inside the package P is further minimised given that it is not just the length of the row that is minimised thanks to the alternate orientation of the objects along each row, but the width occupied by the three parallel rows is also minimised thanks to the offsetting between the pairs of adjacent rows. Moreover, as can be seen from figure 11 and from figure 14, the offsetting between the pairs of adjacent rows allows the three rows to be approached while they slide along the respective guides. In particular, with reference to figure 14, the left side of the protruding edge B of the object C arranged in the guide 101 is housed in the housing 101ab given that this object is oriented with the first end C1 upwards. At the same time, the right side of the protruding edge B of the object C arranged in the guide 102 and occupying the same position in the row as that occupied by the object C arranged in the guide 101 is housed in the housing 101cd given that this object is oriented with the first end C1 downwards. Similarly, whereas the left side of the protruding edge B of the object C arranged in the guide 102 is in the housing 102cd, the right side of the protruding edge B of the object C arranged in the guide 103 is in the housing 102ab. In this way, thanks to the offsetting between the pairs of adjacent rows, it is ensured that the protruding edges B of the objects C in the three guides are always inside a housing in both sides of each guide and do not interfere with each other. In order to obtain the offsetting between the two rows it is possible to operate guides 101, 102 and 103 upstream of the entrances 106a, 106b and 106c. For example, it is ensured that the first object that enters into the entrance 106a of the guide 101 has opposite orientation with respect to the first object that enters into the entrance 106b of the guide 102 and has the same orientation as the first object that enters into the entrance 106c of the guide 103. This can be obtained for example if the three rows F1, F2 and F3 are obtained from a single row F0 that is divided into the three rows by directing means 402 (see figure 16). The directing means 402 are operated so that the first object that enters into the entrance 106a of the guide 101 has opposite orientation with respect to the first object that enters into the entrance 106b of the guide 102 and the same orientation as the first object that enters into the entrance 106c of the guide 103. Upstream of the directing means 402 it is possible for example to place blocking means not shown in the figure and adapted for blocking only the objects that have a certain orientation, for example only the objects with the first end C1 facing upwards. When the blocking means are activated, an object with this predetermined orientation is held and it is thus possible to direct a row of objects the first position of which is occupied by an object with this orientation towards the desired guide.

In the configuration of figure 15A the pushing means 201 are distanced from the guides. In particular, the first bar 201c is distanced from the first guide 101 and thus from the objects C of the row F1 housed in the first guide 101, the second bar 201d is distanced from the third guide 103 and thus from the objects C of the row F3 housed in the third guide 103. The figure also shows that the system comprises actuation means, for example an electric motor M, for actuating the movement of the pushing means 201.

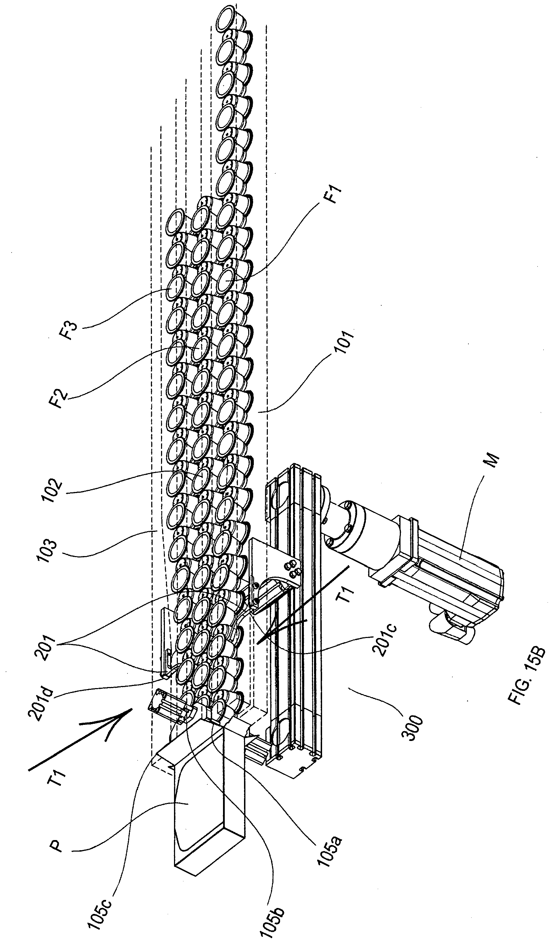

Figure 15B shows that the pushing means 201 are translated along the translation direction T1 so as to be approached to the objects C housed in the three guides. In particular, the first bar 201c is approached to the first guide 101 and thus to the objects C of the row F1 housed in the first guide 101 through a translation in direction T1 from right towards left. The second bar 201d is approached to the third guide 103 and thus to the objects C of the row F3 housed in the third guide 103 through a translation in direction T1 from left towards right. The two bars also inevitably also approach the guide 102. The bar 201c touches one of the objects C of the first row F1, in particular the fifth object counting from the exit 105a, whereas the bar 201d touches one of the objects C of the third row F3, in particular the fifth object starting from the exit 105c. Finally, both of the bars also touch one of the objects C of the second row F2, in particular the fifth object from the exit 105b.

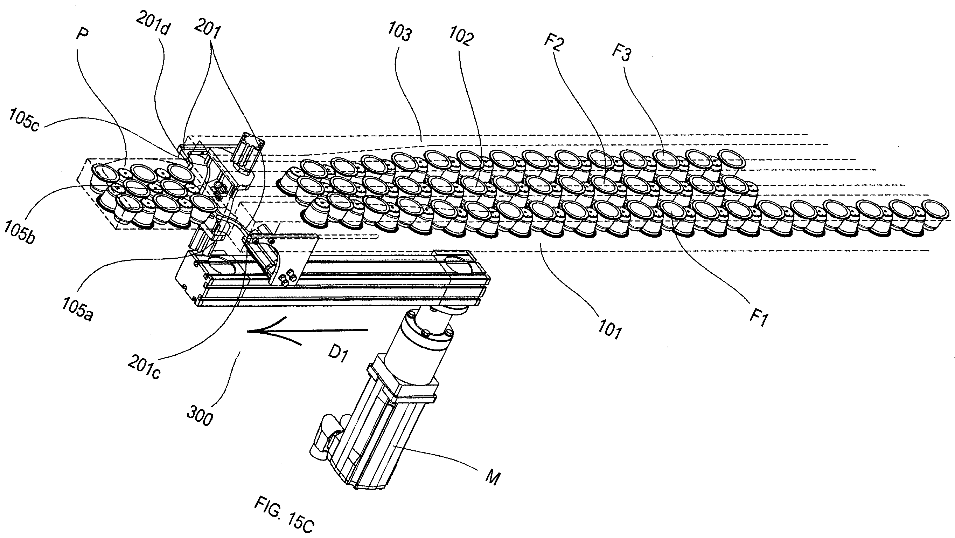

Figure 15C shows that the three blocking means at the downstream exits 105a, 105b and 105c have been opened so as to free the downstream exits 105a, 105b and 105c of the guides 101, 102 and 103. Moreover, the pushing means 201 have been translated along the direction D1 so as to push the fifteen objects C inside the package P arranged at the exits 105a, 105b and 105c. At the end of the stroke the protruding portion of the bars 201c and 201d projects forwards with respect to the exits 105a, 105b and 105c of the guides 101, 102 and 103. Moreover, the projecting portion of the bars 201c and 201d is inside the package P.

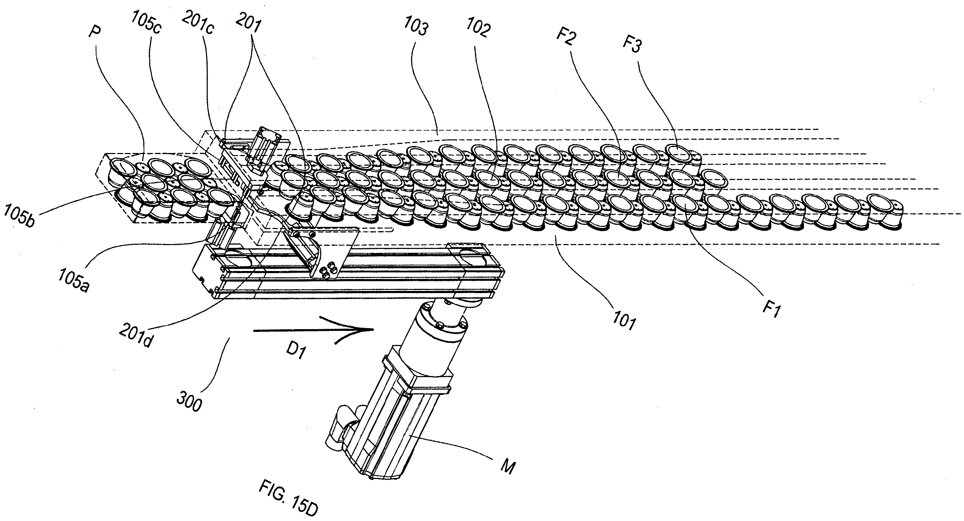

Figure 15D shows that the pushing means 201 have been translated along the direction D1 but the opposite way with respect to the translation carried out in figure 15C so as to make the pushing means 201 completely come out from the package P. The pushing means 201 are thus withdrawn with respect to the exits 105a, 105b and 105c of the guides 101, 102 and 103. It should also be observed that meanwhile the blocking means have again been closed and the objects C have begun to accumulate again in the action area of the pushing means 201, in the guide 101, in the guide 102 and in the guide 103.

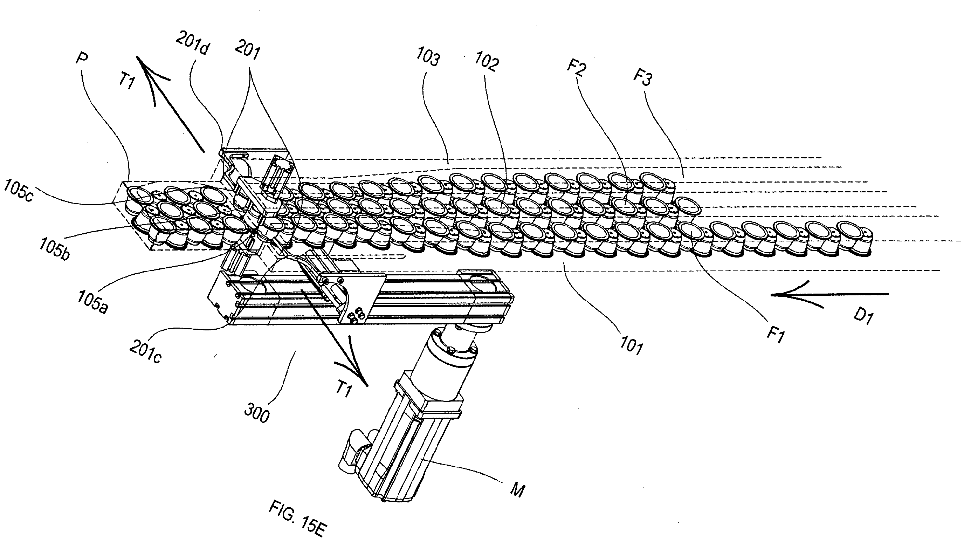

Figure 15E shows that the objects C are accumulated at the blocking means as shown earlier in figure 15A. The pushing means 201 are translated along the direction T1 but the opposite way with respect to the translation shown in figure 15B. In particular, the bar 201c is translated from left to right so as to be distanced from the first guide 101 and from the second guide 102. The bar 201d is translated from right towards left so as to be distanced from the third guide 103 and from the second guide 102.

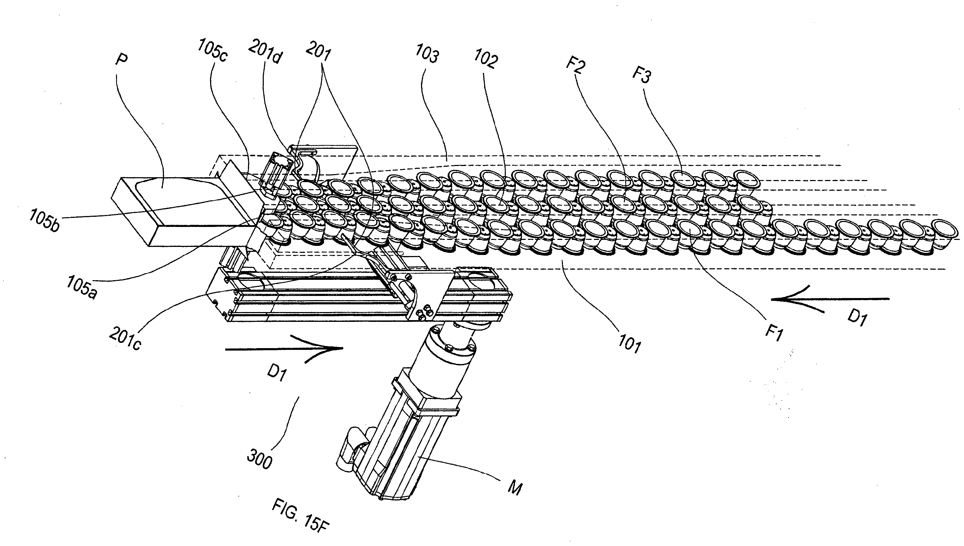

Figure 15F shows that the pushing means 201, after having been distanced from the objects C of the rows F1, F2 and F3, are translated along the direction D1 but the opposite way with respect to the translation shown in figure 15D so as to go back into the starting position as shown in figure 15A. At the same time, a new package P has been brought to the exits 105a, 105b and 105c of the guides 101, 102 and 103.

The cycle then proceeds again from the step shown in figure 15A so as to fill the new package P. The cycle is then repeated many times so as to fill many packages P.

The movements of the various elements of the system as described with reference to figures 15A to 15F are suitably coordinated, for example through a control unit that is suitably programmed and not shown in the figure. The control unit manages the movement of all of the elements so as to ensure the operation as described with reference to figures 15A to 15F.

Figure 16 schematically shows a system comprising an arranging machine 400 and a pushing device 300 like that of figure 11 coupled together. A package P is also shown at the exits 105a, 105b and 105c of the guides 101, 102 and 103, respectively, of the pushing device 300. The packaging machine can be provided by a cartoning machine not shown in the figure. An arranging machine like the arranging machine 400 shown in figure 16 has been described in European patent application No. 15182748.2 to which we refer for the detailed description of the components and of the operation of the arranging machine 400. The exit of the arranging machine 400 is coupled with the pushing device 300 through the coupling guide 401 and directing means 402, for example two levers able to be moved parallel as shown schematically in the figure. In particular, a row F0 of objects arranged in an alternate manner obtained by means of the arranging machine 400 in output from the coupling guide 401 is divided into the rows F1, F2 and F3 that enter into the first guide 101, into the second guide 102 and into the third guide 103, respectively, of the pushing device 300 by means of the directing means 402 that are movable so as to direct the objects C of the row F0 alternatively towards the first guide 101 or the second guide 102 or the third guide 103. The objects C that fall by gravity from the arranging machine 400 after having been arranged along the row F0 in an alternate manner slide along the coupling guide 401 and enter into the first guide 101 or into the second guide 102 or into the third guide 103 based on the position of the directing means 402. The coupling guide 402 is curved so as to change the orientation of the row F0 from vertical, as obtained in output from the arranging machine 400, to horizontal, in order to be able to be introduced into the guides 101, 102 and 103 that are arranged horizontally. Once they have entered into the guides 101, 102 and 103 of the pushing device 300, the objects C of the rows F1, F2 and F3 can be moved so as to reach the action area of the pushing means 201 and thus so as to accumulate in the vicinity of the exits 105a, 105b and 105c of the guides 101, 102 and 103 as described above with reference to figures 15A to 15F.

As can be seen from the figures, all of the embodiments of the present invention shown in figures 2 to 15F make it possible to insert a predetermined number of objects in one or more ready-prepared packages P. The pushing device according to the various embodiments of the present invention can thus be coupled with a system for transporting empty but ready-prepared packages P. It is not necessary to make the package P around the group of objects to be packed as happens based on different solutions known in the state of the art. In particular, based on known solutions of the state of the art, the objects are arranged on a flat sheet of material that is then suitably folded, closed and glued so as to form the package that encloses the objects. The present invention, on the other hand, advantageously makes it possible to insert the groups of objects directly in ready-prepared packages. Based on some embodiments of the present invention, the pushing device can further comprise opening means adapted for keeping the packages open during the insertion of the objects by means of the pushing device. The opening means can for example be arranged at the exits downstream of the one or more guides of the pushing device based on the present invention. For example, the opening means can comprise blades that keep open the one or more compartments of the package to be filled with the objects pushed by the pushing device.

Even if the present invention has been described with reference to the embodiments described above, it is clear for those skilled in the art that it is possible to make different changes, variations and improvements of the present invention in light of the teaching described above and in the attached claims, without departing from the object and the scope of protection of the invention.

For example, even if in the embodiments described above the displacement of capsules for obtaining beverages has been described, the pushing device according to the present invention can operate with other types of objects that comprise a first end, a second end and a protruding edge arranged in proximity of the first end.

Moreover, even though the packing of 10 or 15 objects has been shown, the predetermined number of objects displaced by the pushing device based on the present invention can be whatever. In order to change the number of objects displaced by the pushing device it is possible to change the stroke of the pushing means, in particular it is possible to change the point at which the pushing means are approached to the one or more guides of the pushing device so as to touch one of the objects contained in the guides. In other words, it is possible to change the point at which the translation shown for example in figures 4B, 9B and 15B is carried out therefore to change the length of the return stroke of the pushing means along the direction D1 shown for example in figures 4F, 9F and 15F.

Moreover, even though embodiments have been shown with one, two or three parallel guides to simultaneously displace one, two or three rows of objects, respectively, it is possible to implement configurations of the present invention with a greater number of parallel guides, for example four, five, six or more parallel guides, to simultaneously move the corresponding number of rows of objects.

The pushing device can also be of various dimensions.

The system according to the present invention can also be integrated in a machine for producing capsules or in a machine for packaging them. Alternatively, the system according to the present invention can operate as a connection element between a machine for producing capsules and a machine for packaging them.

Moreover, even though the use of the pushing device according to the present invention has been shown for packaging objects inside a ready-prepared package, the pushing device according to the present invention can also be used to displace the predetermined number of objects organised in one or more rows on any support, not necessarily a ready-prepared package, to then carry out any subsequent manipulation of the objects carried by the pushing device onto the support. For example, the objects can be carried onto a support and then manipulated with any "pick and place" technique, for example by means of suction cups or similar. In this way, it is possible for example to carry groups of objects that have previously been displaced by means of the pushing device according to the present invention onto different planes, for example overlapping planes.

The various embodiments of the present invention can also be advantageously provided with detection and control means, for example photo cells, arranged in one or more regions of the system to detect for example whether each of the one or more guides houses a sufficient number of objects, or to detect whether the action areas of the pushing means are provided with objects. In the case of a negative outcome of the detection, the system can be programmed to be stopped.

Finally, anything that is deemed to be known by those skilled in the art has not been described in order to avoid needlessly excessively overshadowing the described invention.

Consequently, the invention is not limited to the embodiments described above, but is only limited by the scope of protection of the attached claims.

## Claims

1. Pushing device (100, 200, 300) for displacing a predetermined number (N) of objects (C) comprising a first end (C1), a second end (C2) and a protruding edge (B) arranged in proximity of said first end (C1) and arranged in an alternate manner in one or more single file rows (F1, F2, F3) along a first predetermined displacement direction (D1), the pushing device comprising:
at least a first guide (101) for the sliding of said objects (C) along said first predetermined displacement direction (D1), wherein said first guide (101) comprises four housings (101a, 101b, 101c, 101d), wherein a first housing (101a) and a second housing (101b) are arranged side by side on the same first level with respect to the bottom of said guide (101) so as to house the protruding edge (B) of the objects oriented according to a first orientation and wherein a third housing (101c) and a fourth housing (101d) are arranged side by side on the same second lever with respect to the bottom of said guide (101) so as to house the protruding edge (B) of the objects oriented according to second orientation;
pushing means (201) translatable along a first translation direction (T1) so as to be approached to said objects (C) when said objects (C) are housed in said first guide (101) so as to touch at least one of said objects (C) and so as to further be distanced from said objects (C), said pushing means (201) being further translatable along said first predetermined displacement direction (D1) so as to push said objects (C) along said first predetermined displacement direction (D1).

2. Pushing device according to claim 1, wherein said first translation direction (T1) is perpendicular with respect to said first predetermined displacement direction (D1) so that said pushing means (201) approach said objects (C) from above and/or from below when said objects (C) are housed in said first guide (101).

3. Pushing device according to claim 1, wherein said first translation direction (T1) is perpendicular with respect to said first predetermined displacement direction (D1) so that said pushing means (201) approach said objects (C) from the right and/or from the left when said objects (C) are housed in said first guide (101).

4. Pushing device according to one of claims 1 to 3, wherein said pushing means (201) are configured so as to engage the protruding edge (B) of said objects (C) so that when said pushing means (201) are approached to said objects (C) said pushing means (201) touch only one of the objects (C) oriented with the first end (C1) facing said pushing means (201) and do not touch the objects (C) oriented with the first end (C1) facing away from said pushing means (201).

5. Pushing device according to one of claims 1 to 4, wherein said pushing means (201) comprise a fork comprising two teeth (201a, 201b) and wherein the lateral distance (D) between said two teeth (201a, 201b) is higher than the width of said second end (C2) of said objects (C) and is lower than the width of said first end (C1) of said objects (C).

6. Pushing device according to one of claims 1 to 5, wherein at least a portion of the bottom of said first guide (101) is movable along said first predetermined displacement direction (D1) and its surface is configured so as to drag said objects (C) in the displacement by means of friction.

7. Pushing device according to one of claims 1 to 6, wherein said first guide (101) further comprises advance means, for example one or more nozzles for blowing air under pressure, adapted to move forward said objects (C) along said first displacement direction (D1).

8. Pushing device according to one of claims 1 to 7, further comprising a second guide (102) parallel to said first guide (101), said second guide (102) comprising housings (102a, 102b, 102c, 102d) for housing the protruding edge (B) of said objects (C) during the displacement and wherein when said pushing means (201) are approached to said objects (C) housed in said first guide (101) said pushing means not only touch at least one of the objects (C) housed in said first guide (101) but also touch at least one of the objects housed in said second guide (102) so as to push at the same time objects (C) along said first guide (101) and along said second guide (102) along said first displacement direction (D1).

9. Pushing device according to claim 8, further comprising a third guide (103) parallel to said first guide (101) and to said second guide (102), said third guide (102) comprising housings (103a, 103b, 103c, 103d) for housing the protruding edge (B) of said objects (C) during the displacement and wherein when said pushing means (201) are approached to said objects (C) housed in said first guide (101) said pushing means not only touch at least one of the objects (C) housed in said first guide (101) and in said second guide (102) but also touch at least one of the objects housed in said third guide (103) so as to push at the same time objects (C) along said first guide (101), along said second guide (102) and along said third guide (103) along said first displacement direction (D1).

10. System for packaging a predetermined number (N) of objects (C) comprising a first end (C1), a second end (C2) and a protruding edge (B) arranged in proximity of said first end (C1) and arranged in an alternate manner in one or more single file rows (F1, F2, F3) in a package (P), said system comprising a pushing device (100, 200, 300) according to one of claims 1 to 9 and an arranging machine (400) for arranging objects comprising a first end and a protruding edge arranged in proximity of said first end in an alternate manner in single file rows, wherein the output of said arranging machine (400) is coupled with the input of said pushing device (100, 200, 300), so that said pushing device (100, 200, 300) receives in input one or more rows (F1, F2, F3) of objects arranged in an alternate manner exiting from said arranging machine (400).

11. System for packaging a predetermined number (N) of objects (C) comprising a first end (C1), a second end (C2) and a protruding edge (B) arranged in proximity of said first end (C1) and arranged in an alternate manner in one or more single file rows (F1, F2, F3) in a package (P), said system comprising a pushing device (100, 200, 300) according to one of claims 1 to 9 and a cartoning machine adapted to provide one or more of said packages (P), wherein said cartoning machine and said pushing device (100, 200, 300) are coupled so that the predetermined number (N) of objects pushed by said pushing device (100, 200, 300) is introduced into a package (P) provided by said cartoning machine.

12. Machine for packaging a predetermined number (N) of objects (C) comprising a first end (C1), a second end (C2) and a protruding edge (B) arranged in proximity of said first end (C1) and arranged in an alternate manner in one or more single file rows (F1, F2, F3) in a package (P), said machine comprising a system according to one or both claims 10 and 11.

13. Method for packaging a predetermined number (N) of objects (C) comprising a first end (C1), a second end (C2) and a protruding edge (B) arranged in proximity of said first end (C1) and arranged in an alternate manner in one or more single file rows (F1, F2, F3) in a package (P) comprising the following step:
insertion of said predetermined number (N) of said objects (C) in said package (P) by means of a pushing device according to one of claims 1 to 9, wherein said package (P) is ready made and open before said insertion.

14. Method according to claim 13, wherein said objects (C) are capsules for obtaining beverages, for example coffee, tea or the like.

## Patentansprüche

1. Schiebevorrichtung (100, 200, 300) zum Verrücken einer vorgegebenen Anzahl (N) von Objekten (C), die ein erstes Ende (C1), ein zweites Ende (C2) sowie einen vorstehenden Rand (B) umfassen, der in der Nähe des ersten Endes (C1) angeordnet ist, und die in einer ersten vorgegebenen Verrückungs-Richtung (D1) abwechselnd in einer oder mehreren Einzelreihe/n (F1, F2, F3) angeordnet sind, wobei die Schiebevorrichtung umfasst:
wenigstens eine erste Führung (101) für das Gleiten der Objekte (C) in der ersten vorgegebenen Verrückungs-Richtung (D1), wobei die erste Führung (101) vier Gehäuse (101a, 101b, 101c, 101d) umfasst und ein erstes Gehäuse (101a) sowie ein zweites Gehäuse (101b) nebeneinander in der gleichen ersten Höhe in Bezug auf den Boden der Führung (101) angeordnet sind und den vorstehenden Rand (B) der Objekte aufnehmen, die in einer ersten Ausrichtung ausgerichtet sind, und ein drittes Gehäuse (101c) sowie ein viertes Gehäuse (101d) nebeneinander in der gleichen zweiten Höhe in Bezug auf den Boden der Führung (101) angeordnet sind und den vorstehenden Rand (B) der Objekte aufnehmen, die in einer zweiten Ausrichtung ausgerichtet sind;
eine Schiebeeinrichtung (201), die in einer ersten Verschiebungs-Richtung (T1) so verschoben werden kann, dass sie den Objekten (C) näher gebracht wird, wenn die Objekte (C) in der ersten Führung (101) aufgenommen sind, so dass sie wenigstens eines der Objekte (C) berührt und weiterhin von den Objekten (C) entfernt ist, wobei die Schiebeeinrichtung (201) weiter in der ersten vorgegebenen Verrückungs-Richtung (D1) verschoben werden kann, um die Objekte (C) in der ersten vorgegebenen Verrückungs-Richtung (D1) zu schieben.

2. Schiebevorrichtung nach Anspruch 1, wobei die erste Verschiebungs-Richtung (T1) senkrecht in Bezug auf die erste vorgegebene Verrückungs-Richtung (D1) ist, so dass die Schiebeeinrichtung (201) sich den Objekten (C) von oben und/oder von unten nähert, wenn die Objekte (C) in der ersten Führung (101) aufgenommen sind.

3. Schiebevorrichtung nach Anspruch 1, wobei die erste Verschiebungs-Richtung (T1) senkrecht in Bezug auf die erste vorgegebene Verrückungs-Richtung (D1) ist, so dass die Schiebeeinrichtung (201) sich den Objekten (C) von rechts und/oder von links nähert, wenn die Objekte (C) in der ersten Führung (101) aufgenommen sind.

4. Schiebevorrichtung nach einem der Ansprüche 1 bis 3, wobei die Schiebeeinrichtung (201) so ausgeführt ist, dass sie mit dem vorstehenden Rand (B) der Objekte (C) so in Eingriff kommt, dass, wenn die Schiebeeinrichtung (201) den Objekten(C) näher gebracht wird, die Schiebeeinrichtung (201) nur eines der Objekte (C) berührt, das so ausgerichtet ist, dass das erste Ende (C1) der Schiebeeinrichtung (201) zugewandt ist, und die Objekte (C) nicht berührt, die so ausgerichtet sind, dass das erste Ende (C1) von der Schiebeeinrichtung (201) weg gewandt ist.

5. Schiebevorrichtung nach einem der Ansprüche 1 bis 4, wobei die Schiebeeinrichtung (201) eine Gabel mit zwei Zähnen (201a, 201b) umfasst und der seitliche Abstand (D) zwischen den zwei Zähnen (201a, 201b) größer ist als die Breite des zweiten Endes (C2) der Objekte (C) und kleiner ist als die Breite des ersten Endes (C1) der Objekte (C).

6. Schiebevorrichtung nach einem der Ansprüche 1 bis 5, wobei wenigstens ein Abschnitt des Bodens der ersten Führung (101) in der ersten vorgegebenen Verrückungs-Richtung (D1) bewegt werden kann und ihre Oberfläche so ausgeführt ist, dass sie die Objekte (C) bei der Verrückung mittels Reibung mitführt.

7. Schiebevorrichtung nach einem der Ansprüche 1 bis 6, wobei die erste Führung (101) des Weiteren Vorschubeinrichtungen, beispielsweise eine oder mehrere Düse/n zum Blasen von Luft unter Druck, umfasst, die so eingerichtet ist/sind, dass sie die Objekte (C) in der ersten Verrückungs-Richtung (D1) vorwärts bewegt/bewegen.

8. Schiebevorrichtung nach einem der Ansprüche 1 bis 7, die des Weiteren eine zweite Führung (102) parallel zu der ersten Führung (101) umfasst, wobei die zweite Führung (102) Gehäuse (102a, 102b, 102c, 102d) zum Aufnehmen des vorstehenden Randes (B) der Objekte (C) während der Verschiebung umfasst, und wobei, wenn die Schiebeeinrichtung (201) den in der ersten Führung (101) aufgenommenen Objekten (C) näher gebracht wird, die Schiebeeinrichtung nicht nur wenigstens eines der in der ersten Führung (101) aufgenommenen Objekte (C) berührt, sondern auch wenigstens eines der in der zweiten Führung (102) aufgenommenen Objekte berührt und so gleichzeitig Objekte (C) in der ersten Verrückungs-Richtung (D1) entlang der ersten Führung (101) und entlang der zweiten Führung (102) schiebt.

9. Schiebevorrichtung nach Anspruch 8, die des Weiteren eine dritte Führung (103) parallel zu der ersten Führung (101) und zu der zweiten Führung (102) umfasst, wobei die dritte Führung (102) Gehäuse (103a, 103b, 103c, 103d) zum Aufnehmen des vorstehenden Randes (B) der Objekte (C) während der Verrückung umfasst, und wobei, wenn die Schiebeeinrichtung (201) den in der ersten Führung (101) aufgenommenen Objekten (C) näher gebracht wird, die Schiebeeinrichtung nicht nur wenigstens eines der in der ersten Führung (101) und in der zweiten Führung (102) aufgenommenen Objekte (C) berührt, sondern auch wenigstens eines der in der dritten Führung (103) aufgenommenen Objekte berührt und so gleichzeitig Objekte (C) in der ersten Verrückungs-Richtung (D1) entlang der ersten Führung (101), entlang der zweiten Führung (102) sowie entlang der dritten Führung (103) schiebt.

10. System zum Verpacken einer vorgegebenen Anzahl (N) von Objekten (C), die ein erstes Ende (C1), ein zweites Ende (C2) sowie einen vorstehenden Rand (B) umfassen, der in der Nähe des ersten Endes (C1) angeordnet ist, und die abwechselnd in einer oder mehreren Einzelreihe/n (F1, F2, F3) angeordnet sind, in einer Verpackung (P), wobei das System eine Schiebevorrichtung (100, 200, 300) nach einem der Ansprüche 1 bis 9 sowie eine Anordnungs-Maschine (400) umfasst, mit der Objekte, die ein erstes Ende und einen vorstehenden Rand umfassen, der in der Nähe des ersten Endes angeordnet ist, abwechselnd in Einzelreihen angeordnet werden, wobei der Ausgang der Anordnungs-Maschine (400) mit dem Eingang der Schiebevorrichtung (100, 200, 300) so gekoppelt ist, dass die Schiebevorrichtung (100, 200, 300) am Eingang eine oder mehrere Reihe/n (F1, F2, F3) abwechselnd angeordneter Objekte empfängt, die aus der Anordnungsmaschine (400) austreten.

11. System zum Verpacken einer vorgegebenen Anzahl (N) von Objekten (C), die ein erstes Ende (C1), ein zweites Ende (C2) sowie einen vorstehenden Rand (B) umfassen, der in der Nähe des ersten Endes (C1) angeordnet ist, und die abwechselnd in einer oder mehreren Einzelreihe/n (F1, F2, F3) angeordnet sind, in einer Verpackung (P), wobei das System eine Schiebevorrichtung (100, 200, 300) nach einem der Ansprüche 1 bis 9 sowie eine Kartonier-Maschine, die zum Bereitstellen einer oder mehrerer der Verpackungen (P) eingerichtet ist, wobei die Kartonier-Maschine und die Schiebevorrichtung (100, 200, 300) so gekoppelt sind, dass die vorgegebene Anzahl (N) durch die Schiebevorrichtung (100, 200, 300) geschobener Objekte in eine Verpackung (P) eingeleitet wird, die durch die Kartonier-Maschine bereitgestellt wird.

12. Maschine zum Verpacken einer vorgegebenen Anzahl (N) von Objekten (C), die ein erstes Ende (C1), ein zweites Ende (C2) sowie einen vorstehenden Rand (B) umfassen, der in der Nähe des ersten Endes (C1) angeordnet ist, und die abwechselnd in einer oder mehreren Einzelreihe/n (F1, F2, F3) angeordnet sind, in einer Verpackung (P), wobei die Maschine ein System nach einem oder beiden der Ansprüche 10 und 11 umfasst.

13. Verfahren zum Verpacken einer vorgegebenen Anzahl (N) von Objekten (C), die ein erstes Ende (C1), ein zweites Ende (C2) sowie einen vorstehenden Rand (B) umfassen, der in der Nähe des ersten Endes (C1) angeordnet ist, und die abwechselnd in einer oder mehreren Einzelreihe/n (F1, F2, F3) angeordnet sind, in einer Verpackung (P), wobei es den folgenden Schritt umfasst:
Einführung der vorgegebenen Anzahl (N) der Objekte (C) in die Verpackung (P) mittels einer Schiebevorrichtung nach einem der Ansprüche 1 bis 9, wobei die Verpackung (P) vor der Einführung fertig gestellt und geöffnet wird.

14. Verfahren nach Anspruch 13, wobei die Objekte(C) Kapseln zum Bereiten von Getränken, beispielsweise Kaffee, Tee oder dergleichen, sind.

## Revendications

1. Dispositif de poussée (100, 200, 300) pour déplacer un nombre prédéterminé (N) d'objets (C) comprenant une première extrémité (C1), une seconde extrémité (C2) et un bord saillant (B) disposé à proximité de ladite première extrémité (C1) et disposé de manière alternée en une ou plusieurs rangées en file indienne (F1, F2, F3) le long d'une première direction de déplacement prédéterminée (D1), le dispositif de poussée comprenant:
au moins un premier guide (101) pour le coulissement desdits objets (C) le long de ladite première direction de déplacement prédéterminée (D1), dans lequel ledit premier guide (101) comprend quatre logements (101a, 101b, 101c, 101d), dans lequel un premier logement (101a) et un deuxième logement (101b) sont disposés côte à côte sur le même premier niveau par rapport au fond dudit guide (101) de manière à loger le bord saillant (B) des objets orientés selon une première orientation et dans lequel un troisième logement (101c) et un quatrième logement (101d) sont disposés côte à côte sur le même deuxième levier par rapport au fond dudit guide (101) de manière à loger le bord saillant (B) des objets orientés selon une deuxième orientation;
des moyens de poussée (201) pouvant être translatés selon une première direction de translation (T1) de manière à se rapprocher desdits objets (C) lorsque lesdits objets (C) sont logés dans ledit premier guide (101) de manière à toucher au moins un desdits objets (C) et de manière à s'éloigner davantage desdits objets (C), lesdits moyens de poussée (201) pouvant en outre être translatés selon ladite première direction de déplacement prédéterminée (D1) de manière à pousser lesdits objets (C) selon ladite première direction de déplacement prédéterminée (D1).

2. Dispositif de poussée selon la revendication 1, dans lequel ladite première direction de translation (T1) est perpendiculaire par rapport à ladite première direction de déplacement prédéterminée (D1) de sorte que lesdits moyens de poussée (201) approchent lesdits objets (C) par le haut et/ou par le bas lorsque lesdits objets (C) sont logés dans ledit premier guide (101).

3. Dispositif de poussée selon la revendication 1, dans lequel ladite première direction de translation (T1) est perpendiculaire par rapport à ladite première direction de déplacement prédéterminée (D1) de sorte que lesdits moyens de poussée (201) s'approchent desdits objets (C) par la droite et/ou par la gauche lorsque lesdits objets (C) sont logés dans ledit premier guide (101).

4. Dispositif de poussée selon l'une des revendications 1 à 3, dans lequel lesdits moyens de poussée (201) sont configurés de manière à engager le bord saillant (B) desdits objets (C) de sorte que lorsque lesdits moyens de poussée (201) sont approchés desdits objets (C), lesdits moyens de poussée (201) touchent seulement l'un des objets (C) orientés avec la première extrémité (C1) faisant face auxdits moyens de poussée (201) et ne touchent pas les objets (C) orientés avec la première extrémité (C1) opposée auxdits moyens de poussée (201).

5. Dispositif de poussée selon l'une des revendications 1 à 4, dans lequel lesdits moyens de poussée (201) comprennent une fourche comprenant deux dents (201a, 201b) et dans lequel la distance latérale (D) entre lesdites deux dents (201a, 201b) est supérieure à la largeur de ladite seconde extrémité (C2) desdits objets (C) et est inférieure à la largeur de ladite première extrémité (C1) desdits objets (C).

6. Dispositif de poussée selon l'une des revendications 1 à 5, dans lequel au moins une partie du fond dudit premier guide (101) est mobile le long de ladite première direction de déplacement prédéterminée (D1) et sa surface est configurée de manière à entraîner lesdits objets (C) dans le déplacement par frottement.

7. Dispositif de poussée selon l'une des revendications 1 à 6, dans lequel ledit premier guide (101) comprend en outre des moyens d'avance, par exemple une ou plusieurs buses pour souffler de l'air sous pression, adaptés pour faire avancer lesdits objets (C) le long de ladite première direction de déplacement (D1).

8. Dispositif de poussée selon l'une des revendications 1 à 7, comprenant en outre un second guide (102) parallèle audit premier guide (101), ledit second guide (102) comprenant des logements (102a, 102b, 102c.), ledit premier guide (101) comprenant en outre des moyens d'avance, par exemple une ou plusieurs buses pour souffler de l'air sous pression, adaptées pour faire avancer lesdits objets (C) le long de ladite première direction de déplacement (D1), 102d) pour loger le bord saillant (B) desdits objets (C) pendant le déplacement et dans lequel lorsque lesdits moyens de poussée (201) sont approchés desdits objets (C) logés dans ledit premier guide (101), lesdits moyens de poussée non seulement touchent au moins un des objets (C) logés dans ledit premier guide (101) mais touchent également au moins un des objets logés dans ledit second guide (102) de manière à pousser en même temps les objets (C) le long dudit premier guide (101) et le long dudit second guide (102) le long de ladite première direction de déplacement (D1).

9. Dispositif de poussée selon la revendication 8, comprenant en outre un troisième guide (103) parallèle audit premier guide (101) et audit deuxième guide (102), ledit troisième guide (102) comprenant des logements (103a, 103b, 103c), 103d) pour loger le bord saillant (B) desdits objets (C) pendant le déplacement et dans lequel lorsque lesdits moyens de poussée (201) sont approchés desdits objets (C) logés dans ledit premier guide (101), lesdits moyens de poussée non seulement touchent au moins un des objets (C) logés dans ledit premier guide (101) et dans ledit deuxième guide (102) mais touchent également au moins un des objets logés dans ledit troisième guide (103) de manière à pousser en même temps les objets (C) le long dudit premier guide (101), le long dudit deuxième guide (102) et le long dudit troisième guide (103) le long de ladite première direction de déplacement (D1).

10. Système pour emballer un nombre prédéterminé (N) d'objets (C) comprenant une première extrémité (C1), une deuxième extrémité (C2) et un bord saillant (B) disposé à proximité de ladite première extrémité (C1) et disposé de manière alternée en une ou plusieurs rangées en file unique (F1, F2, F3) dans un emballage (P), ledit système comprenant un dispositif de poussée (100, 200, 300) selon l'une des revendications 1 à 9 et une machine de rangement (400) pour ranger des objets comprenant une première extrémité et un bord en saillie disposé à proximité de ladite première extrémité de manière alternée en rangées d'un seul fichier, dans laquelle la sortie de ladite machine de rangement (400) est couplée à l'entrée dudit dispositif de poussée (100, 200, 300), de sorte que ledit dispositif de poussée (100, 200, 300) reçoit en entrée une ou plusieurs rangées (F1, F2, F3) d'objets disposés de manière alternée sortant de ladite machine de rangement (400).

11. Système pour emballer un nombre prédéterminé (N) d'objets (C) comprenant une première extrémité (C1), une deuxième extrémité (C2) et un bord saillant (B) disposé à proximité de ladite première extrémité (C1) et disposé de manière alternée en une ou plusieurs rangées (F1, F2, F3) en file indienne dans un emballage (P), ledit système comprenant un dispositif de poussée (100, 200, 300), 300) selon l'une des revendications 1 à 9 et une machine d'encartonnage adaptée pour fournir un ou plusieurs desdits emballages (P), dans laquelle ladite machine d'encartonnage et ledit dispositif de poussée (100, 200, 300) sont couplés de sorte que le nombre prédéterminé (N) d'objets poussés par ledit dispositif de poussée (100, 200, 300) est introduit dans un emballage (P) fourni par ladite machine d'encartonnage.

12. Machine pour emballer un nombre prédéterminé (N) d'objets (C) comprenant une première extrémité (C1), une seconde extrémité (C2) et un bord saillant (B) disposé à proximité de ladite première extrémité (C1) et disposé de manière alternée en une ou plusieurs rangées en file indienne (F1, F2, F3) dans un emballage (P), ladite machine comprenant un système selon l'une ou les deux revendications 10 et 11.

13. Procédé pour emballer un nombre prédéterminé (N) d'objets (C) comprenant une première extrémité (C1), une seconde extrémité (C2) et un bord saillant (B) disposé à proximité de ladite première extrémité (C1) et disposé de manière alternée en une ou plusieurs rangées de file unique (F1, F2, F3) dans un emballage (P) comprenant l'étape suivante:
insertion dudit nombre prédéterminé (N) desdits objets (C) dans ledit emballage (P) au moyen d'un dispositif de poussée selon l'une des revendications 1 à 9, dans lequel ledit emballage (P) est prêt à être fabriqué et ouvert avant ladite insertion.

14. Procédé selon la revendication 13, dans lequel lesdits objets (C) sont des capsules pour obtenir des boissons, par exemple du café, du thé ou similaire.
